# EUROPEAN PATENT APPLICATION

(11) **EP 4 353 895 A1**
(43) Date of publication of application: **17.04.2024**
(21) Application number: 22819594.7
(22) Date of filing: 09.06.2022
(51) Int. Cl.: D06F 39/08, D06F 37/14, F16K 1/00

(54) **CENTRIFUGAL DRAINAGE MECHANISM AND LAUNDRY LIFTING DEVICE FOR WASHING MACHINE, AND WASHING MACHINE**

(30) Priority: 09.06.2021 CN 202110643017; 09.06.2021 CN 202110643019; 09.06.2021 CN 202110641804; 09.06.2021 CN 202110641822
(71) Applicant: Qingdao Haier Drum Washing Machine Co., Ltd., Qingdao, Shandong 266101 (CN); HAIER SMART HOME CO., LTD., Laoshan District Qingdao Shandong 266101 (CN)
(72) Inventor: ZHAO, Zhiqiang, Qingdao, Shandong 266101 (CN); XU, Sheng, Qingdao, Shandong 266101 (CN); LV, Peishi, Qingdao, Shandong 266101 (CN)
(74) Representative: Beck & Rössig European Patent Attorneys
(86) International application number: PCT/CN2022/097776
(87) International publication number: WO 2022/257997

(57) **Abstract**

A centrifugal drainage mechanism (5) and a laundry lifting device for a washing machine, and a washing machine are disclosed. The centrifugal drainage mechanism (5) comprises: a centrifugal component (51), being configured of moving under a centrifugal force; a valve plug component (52), used for sealing a water drainage hole of a washing machine in a normal condition; and a lever (53), wherein the middle of the lever structure is rotatably supported and fixed, one end of the lever structure is connected and fixed to the centrifugal component (51), and the other end of the lever structure abuts against the valve plug component (52) and is in contact fit with the valve plug component (52). The centrifugal component (51) drives an end, matched the valve plug component (52), of the lever (53) to rotate to a direction away from the valve plug component (52) under the centrifugal force, and then the valve plug component (52) moves to open the drainage hole. The lever (53) of the centrifugal drainage mechanism (5) is only in contact with the valve plug component (52), thereby effectively solving the problems whereby the valve plug component (52) is subjected to a cornering force of a tensile force of a lever (53) because an existing lever structure (53) is hinged and connected to a valve plug (52) by means of a shaft and a shaft hole, and thus, the position of the valve plug (52) does not preferably correspond to that of the water drainage hole, the valve plug (52) fails, and a sealing effect of an inner cylinder (1) is affected.

## Description

### TECHNICAL FIELD

The present invention belongs to the field of drainage of washing machines, and in particular relates to a centrifugal drainage mechanism for a washing machine, a laundry lifting device and a washing machine.

### BACKGROUND

As a household appliance most widely used in daily life of people, a washing machine helps people get rid of the trouble of washing laundry and brings great convenience to people. However, the washing machine also has certain disadvantages such as long time consumption and high water consumption. With the development of society, water resources become more and more important as an important natural resource, the water-saving awareness of people is also improved accordingly. So it is particularly important to achieve the water-saving function of the washing machine. In addition, since an inner cylinder is not only used to hold washing water, but also is driven to rotate to beat and wash laundry in the cylinder, it is an urgent problem to be solved to provide a drainage mechanism suitable for the above washing machine becomes.

The Chinese patent application No. 201810163972.0 discloses a valve core of a sealing valve, and a cleaning-free washing machine. The valve core of a sealing valve includes a valve plug corresponding to a drainage outlet formed in a side wall of an inner cylinder, and a balancing weight hinged to an upper end of the valve plug. A sealing valve mounting structure is fixedly mounted on the side wall of the inner cylinder, and a return spring is arranged between the sealing valve mounting structure and the valve plug. An upper end of the balancing weight is provided with a connecting rib protruding upward in an axial direction, and the upper end of the valve plug penetrates a top of a mounting sleeve, and an end of the connecting rib is hinged to the upper end of the valve plug.

The cleaning-free washing machine proposed in the above application can solve the drainage problem of a non-porous drum washing machine by using a sealing valve under centrifugal force. However, since the end of the connecting rib is hinged to the upper end of the valve plug through a shaft and a shaft hole in the application, the sealing valve will be subjected to a biasing force of lever tension. So a valve core cannot align well with a water drainage hole, which causes the valve core to fail working, and further to affect the sealing effect of the inner cylinder.

In view of this, the present invention is specifically proposed.

### SUMMARY

The technical problem to be solved by the present invention is to overcome the deficiencies in the prior art, and provide a centrifugal drainage mechanism, and a lever and a valve plug component are only in contact fit. The following problem is solved. A lever and a valve plug of the existing centrifugal drainage mechanism are hinged through a shaft and a shaft hole, a valve plug component is subjected to a biasing force of lever tension, so that the position of the valve plug cannot correspond well to a water drainage hole, resulting in failure of the valve plug, affecting the sealing effect of an inner cylinder.

In order to solve the above technical problem, a first aspect of the present application discloses a centrifugal drainage mechanism for a washing machine. The centrifugal drainage mechanism includes: a centrifugal component moving under the action of centrifugal force; a valve plug component normally sealing a water drainage hole of a washing machine; and a lever, wherein a middle of the lever is rotatably supported and fixed, one end of the lever is fixedly connected to the centrifugal component, and the other end of the lever is pressed against the valve plug component to be in contact with the valve plug component. Under the action of centrifugal force, the centrifugal component drives the end, matched with the valve plug component, of the lever to rotate in a direction away from the valve plug component, and the valve plug component moves accordingly to open the water drainage hole.

Further, the valve plug component includes: a valve plug normally sealed at the water drainage hole of a washing machine; a valve rod, and an elastic element, wherein an upper end of the valve rod is in contact with the other end of the lever, and is limited under the lever, and a lower end of the valve rod is connected to the valve plug; and the elastic element configured to exert an upward pushing or pulling force on the valve rod, so as to drive the valve plug to move upward to open the water drainage hole when the end, matched with the valve rod, of the lever rotates upwards. Preferably, the elastic element includes a compression spring sleeving the valve rod, and an upper end of the compression spring is limited and connected to the valve rod.

Further, the upper end of the valve rod is provided with an abutting contact portion having an enlarged outer diameter, and the other end of the lever abuts against the abutting contact portion.

Further, an upper surface of the abutting contact portion has a curved surface structure with an arc-shape; a lower surface of the abutting contact portion has a flat-walled structure, and the upper end of the compression spring compressively abuts against the lower surface of the abutting contact portion. Preferably, an annular pressing plate is connected to the upper end of the compression spring, and the annular pressing plate abuts against the lower surface of the abutting contact portion.

Further, the lever includes: a power arm connected to the centrifugal component; a resistance arm pressed against the valve plug component, and being in contact with the valve plug component; and a rolling element attached on an end of the resistance arm, wherein the rolling element is in rolling point contact with the valve plug component.

Further, the rolling element is a roller mounted on the end of the resistance arm of the lever.

Further, the resistance arm of the lever is provided with a notch groove for accommodating and mounting the rolling element; and the rolling element is rotatably disposed within the notch groove, a connecting rotating shaft is fixedly arranged within the notch groove, and the rolling element is rotatably connected to the connecting rotating shaft.

A second aspect of the present application provides a laundry lifting device provided with the centrifugal drainage mechanism, including: a lifting rib shell provided with a cavity inside having an opening; and a mounting cover plate mounted at the opening of the lifting rib shell. The centrifugal drainage mechanism arranged within the lifting rib shell, and fixedly mounted on the mounting cover plate. Further, the mounting cover plate is provided with a through hole for allowing the valve rod of the valve plug component to pass through; the upper end of the valve rod is in contact with the lever located in the lifting rib shell, and the lower end of the valve rod is extended out of the mounting cover plate via the through hole to be connected to the valve plug. An elastic element is arranged between the mounting cover plate and the valve rod, and the elastic element being in compressive state is arranged between the mounting cover plate and the valve rod. Preferably, the elastic element is a compression spring fixedly attached on the mounting cover plate and sleeving the valve rod, one end of the compression spring is fixedly connected to the mounting cover plate, and the other end of the compression spring compressively abuts against the valve rod.

A third aspect of the present application provides a washing machine provided with the centrifugal drainage mechanism or the laundry lifting device.

Further, the washing machine includes: an inner cylinder, wherein a water drainage hole is formed in a side wall of the inner cylinder; and the laundry lifting device is installed at the water drainage hole in an inner wall of the inner cylinder. The centrifugal drainage mechanism of the washing machine can close/open the water drainage hole. Preferably, the washing machine further includes an inner cylinder door mounted in an opening of the inner cylinder and is capable of opening and closing the opening. When the inner cylinder door is closed, the inner cylinder door and the inner cylinder form a separate washing chamber for separately holding washing water during washing laundry.

After adopting the above technical solution, the present invention has the following beneficial effects compared with the prior art.
1. According to the centrifugal drainage mechanism provided by the present application, the lever and the valve plug component are only in contact fit, the valve plug component is closed at the water drainage hole under the pressure of the lever and the action of the compression spring in an initial state. The centrifugal component drives the end, matched with the valve plug component, of the lever to rotate in a direction away from the valve plug component under the action of centrifugal force, and the valve plug component automatically moves upwards accordingly under the action of the elastic element to open the water drainage hole. Through the above design, the valve plug component is not affected by the lateral biasing force of tension of the lever, the position of the valve plug can always be kept to correspond to the position of the water drainage hole in a normal state, improving the sealing performance of the inner cylinder. The following problems are effectively solved: the lever and the valve plug are hinged through a shaft and a shaft hole, the valve plug component is subjected to a biasing force of lever tension, so that the position of the valve plug cannot correspond well to the water drainage hole, resulting in failure of the valve plug, affecting the sealing effect of the inner cylinder.
2. According to the centrifugal drainage mechanism provided by the present application, the upper end of the valve rod is provided with the abutting contact portion having an enlarged outer diameter, and the upper surface of the abutting contact portion has a circular arc-shaped curved surface structure. And the rolling element is arranged at the end of the resistance arm of the lever, the rolling element being in rolling point contact with the abutting contact portion. By adopting the above design, the valve plug component and the lever are in point contact, the contact area is reduced, the friction resistance is greatly reduced, the wear is reduced, and the service life of the centrifugal drainage mechanism is effectively prolonged. And with the use of rolling contact fit, the operation is stable, the noise is reduced, and the use experience is better.

The technical problem to be solved by the present invention is to overcome the deficiencies in the prior art, and provide a laundry lifting device for a washing machine. Efficient and fast assembly and fixation between the rotating shaft and the mounting cover plate is achieved by fastening the rotating shaft to the mounting cover plate through a fixed support provided, while effectively solving the problems of poor reliability and low stability of the existing centrifugal drainage mechanism.

In order to solve the above technical problems, a first aspect of the present application discloses a laundry lifting device for a washing machine, including: a lifting rib shell provided with a cavity inside with an opening; a mounting cover plate mounted at the opening end of the lifting rib shell; and a centrifugal drainage mechanism. The centrifugal drainage mechanism includes a centrifugal component and a valve plug component which are arranged within the lifting rib shell, and a lever connected between the centrifugal component and the valve plug component. A middle of the lever is rotatably connected to a rotating shaft, and the rotating shaft is supported and fixed to the mounting cover plate by a fixed support.

Further, the rotating shaft is provided with a fixing portion matched with the fixed support, and the fixed support is fixedly connected with the fixing portion to support and fix the rotating shaft to the mounting cover plate.

Further, the fixed support is a screw having an extended length, and the fixing portion is a threaded through hole formed in the rotating shaft, and the screw passes through the threaded through hole to support and fix the rotating shaft at a set height position above the mounting cover plate.

Further, both ends of the rotating shaft are respectively in fit with the lever in rotating manner, the threaded through hole is formed in a middle of the rotating shaft, and the screw is fixedly supported at the middle of the rotating shaft.

Further, a bracket is fixed on the mounting cover plate , the bracket is provided with a threaded connection groove having an extended length and matched with the screw, and the screw is fixedly connected in the threaded connection groove. Preferably, the bracket is located at a middle of the lever for supporting the lever, and an upper end face of the bracket is provided with an arc-shaped support surface matched with the lever. Preferably, the bracket and the mounting cover plate are integrally disposed.

Further, the lever includes a connecting part located at a middle fulcrum, the connecting part is provided with a rotating shaft hole matched with the rotating shaft in a first direction, and the connecting part is provided with an avoidance hole for providing a space the fixed support in a second direction. Preferably, the first direction is a horizontal direction, the second direction is a vertical direction, and the avoidance hole is a through hole having an elongated cross section which runs through from top to bottom in the connecting part.

Further, the connecting part is a thickened connecting part having an enlarged outer diameter in the middle of the lever, and the lever further includes a resistance arm and a power arm which are connected to both sides of the thickened connecting part, wherein the power arm is connected to the centrifugal component, and the resistance arm is connected to the valve plug component.

Further, the thickened connecting part has a cylindrical structure with an enlarged outer diameter and a first extension length L1, and an extension direction of the thickened connecting part is perpendicular to a swinging direction of the lever. The power arm and the resistance arm are of plate-shaped structures connected on both sides of the thickened connecting part and respectively having a first width H 1. The power arm is connected to a lower part of the side, close to the centrifugal component, of the thickened connecting part, and the resistance arm is connected to an upper part of the side, close to the valve plug component, of the thickened connecting part. Preferably, the first width H1 is equal to the first extension length L1, and a thickness of the power arm/the resistance arm is gradually decreased from the thickened connecting part toward the centrifugal component/the valve plug component.

Further, the valve plug component includes a valve plug and a valve rod, and an upper end of the valve rod is rotationally connected with the resistance arm through a valve plug rotating shaft, and a lower end of the valve rod is connected with the valve plug. The end, matched with the valve plug component, of the resistance arm is provided with an open slot for receiving the valve rod. The open slot includes a first side wall and a second side wall which are opposite to each other, and each of the first side wall and the second side wall is provided with a hole matched with the valve plug rotating shaft.

A second aspect of the present application provides a washing machine provided with the laundry lifting device.

Further, the washing machine includes: an inner cylinder; and an inner cylinder door mounted in an opening of the inner cylinder and being capable of opening and closing the opening. When the inner cylinder door is closed, the inner cylinder door and the inner cylinder form a separate washing chamber for separately holding washing water during washing laundry. A water drainage hole is formed in a side wall of the inner cylinder, the laundry lifting device is installed are the water drainage hole in an inner wall of the inner cylinder, and the centrifugal drainage mechanism can close/open the water drainage hole.

After adopting the above technical solution, the present invention has the following beneficial effects compared with the prior art.
1. According to the laundry lifting device for a washing machine provided by the present invention, by fastening the rotating shaft to the mounting cover plate through the fixed support provided, the rotating shaft is efficiently and fast assembled on the mounting cover plate, and the connection is high reliability and high stability, effectively solving the problems of poor reliability and low stability of the existing centrifugal drainage mechanism.
2. In the present application, the fixed support uses the screw having an extended length, the rotating shaft is correspondingly provided with the threaded through hole matched with the rotating shaft, and the screw passes through the threaded through hole to support and fix the rotating shaft at a set height position above the mounting cover plate. By adopting the screw as the fixed support for connecting and fixing the rotating shaft with the mounting cover plate, it is quickly and efficiently assembled, easily disassembled. Not only the connection is firm and reliable, and not easy to loosen, but also the structure is simple, the cost is low, and the use and popularization are easy.
3. In the present application, the lever connected between the centrifugal component and the valve plug component uses the thickened connecting part having a thickened middle part, the rotating shaft hole into which the rotating shaft can be inserted and the avoidance hole for avoiding the fixed support are formed in the thickened connecting part in the middle, and the entire lever forms a combination structure like "6" and "9". The lever adopts the above structure, which facilitates the formation of the rotating shaft hole and the avoidance hole, and at the same time, the structural strength of the lever itself is effectively ensured, so that the lever is not easily deformed during use, and the durability is increased, and the problems of low strength and indurability of the lever due to the formation of the rotating shaft hole and the avoidance hole are effectively avoided.

The technical problem to be solved by the present invention is to overcome the deficiencies in the prior art, and provide a centrifugal drainage mechanism for a washing machine, and a lever and a valve plug component are in limited connection through a ball joint connection structure. The following problems are solved. A lever and a valve plug of the existing centrifugal drainage mechanism are hinged through a shaft and a shaft hole, a valve plug component is affected by a biasing force of lever tension, so that the position of the valve plug cannot correspond well to a water drainage hole, resulting in failure of the valve plug, affecting the sealing effect is effectively solved.

To solve the above technical problem, a first aspect of the present application discloses a centrifugal drainage mechanism for a washing machine, including: a centrifugal component; a valve plug component normally sealing a water drainage hole of a washing machine; and a lever, wherein one end of the lever is fixedly connected to the centrifugal component, and the other end of the lever is in limited connection with the valve plug component by a ball joint connection structure. Further, the ball joint connection structure includes a ball joint housing and a ball joint limited within the ball joint housing; the ball joint housing is fixedly attached on the lever, and the ball joint is correspondingly attached on the valve plug component. Or, the ball joint housing is fixedly attached on the valve plug component, and the ball joint is correspondingly attached on the lever.

Further, the valve plug component includes: a valve plug normally sealing a water drainage hole of a washing machine; and a valve rod, wherein one end of the valve rod is connected to the valve plug, the other end of the valve rod is in limited connection with the lever, and the ball joint or the ball joint housing being fixedly disposed on an end of the valve rod.

Further, the ball joint is of a spherical structure, the ball joint housing is of a hollow hemispherical structure, and the ball joint housing is provided with a hemispherical limiting cavity matched with an outer peripheral wall of the ball joint. Preferably, the ball joint housing is fixedly attached at the end of the lever, the ball joint is fixedly attached at the end of the valve rod. The side, facing the valve plug component, of the ball joint housing is provided with an opening having an inner diameter smaller than a diameter of the ball joint.

Further, the ball joint and the valve rod are integrally formed, and an upper end of the valve rod is configured into a ball joint-like structure to form the ball joint. Preferably, the ball joint and the valve rod are coaxially arranged.

Further, the ball joint housing and the lever are integrally formed. The end, matched with the valve plug component, of the lever is configured into a hollow structure with a cavity inside to form the ball joint housing. Preferably, there is a movable gap between the ball joint housing and the ball joint.

Further, a peripheral wall of the ball joint is provided with a limiting protrusion, and the ball joint housing is correspondingly provided with a limiting groove matched with the limiting protrusion.

A second aspect of the present application provides a laundry lifting device, including a lifting rib shell provided with a chamber inside, wherein the lifting rib shell is provided with the centrifugal drainage mechanism.

Further, the lifting rib shell is of a shell structure with an opening. The laundry lifting device further includes: a mounting cover plate blocking an open end of the lifting rib shell, wherein the centrifugal drainage mechanism is fixedly mounted on the mounting cover plate. Preferably, a valve plug mounting seat is fixedly attached on the mounting cover plate, and the valve plug mounting seat is of a sleeve of which a lower end is open and an upper end is closed. A closed end of the valve plug mounting seat is provided with a through hole for allowing the valve rod to move up and down, and a compression spring is arranged between the valve plug mounting seat and the valve plug.

Further, a middle part of the lever is rotatably connected to a rotating shaft, and the rotating shaft is supported and fixed to the mounting cover plate by a fixed support.

A third aspect of the present application provides a washing machine provided with the centrifugal drainage mechanism or the laundry lifting device.

After adopting the above technical solution, the present invention has the following beneficial effects compared with the prior art.
1. According to the centrifugal drainage mechanism provided by the present application, the lever and the valve plug component are in limited connection through the ball joint connection structure. The following problems are effectively solved. A lever and a valve plug component of the existing centrifugal drainage mechanism are hinged through a shaft and a shaft hole, the valve plug component is affected by a biasing force of lever tension, so that the position of a valve plug cannot correspond well to a water drainage hole, resulting in failure of the valve plug, affecting the sealing effect of an inner cylinder. According to the centrifugal drainage mechanism provided by the present application, the valve plug component is not affected by the biasing force of the tension of the lever, and the position of the valve plug can always be kept to correspond to the water drainage hole in a normal state, so that deviation does not occur, thereby improving the reliability and the sealing performance of the centrifugal drainage mechanism.
2. According to the centrifugal drainage mechanism provided by the present application, by configuring the upper end of the valve rod into the ball j oint, and configuring the end, matched with the valve plug component, of the lever into the ball joint housing, the valve rod and the lever are connected with each other by utilizing the special shapes of their own structures The connection structure is simple, easy to realize, firm and reliable, without being connected and fixed by other connecting parts, thus simplifying the structure of the centrifugal drainage mechanism.

The technical problem to be solved by the present invention is to overcome the deficiencies in the prior art, and provide a centrifugal drainage mechanism for a washing machine, and a lever is connected to a valve plug component by a connecting ring. The following problems are effective solved. A lever and a valve plug of the existing centrifugal drainage mechanism are hinged through a shaft and a shaft hole, a valve plug component is affected by a lateral biasing force of lever tension, so that the position of the valve plug cannot correspond well to a water drainage hole, resulting in failure of the valve plug, affecting the sealing effect is effectively solved.

To solve the above technical problem, a first aspect of the present application discloses a centrifugal drainage mechanism for a washing machine, including: a centrifugal component; a valve plug component normally sealing a water drainage hole of a washing machine; and a lever. One end of the lever is connected with the centrifugal component, and the other end of the lever is connected with the valve plug component by a connecting ring.

Further, the valve plug component includes: a valve plug; and a valve rod, wherein one end of the valve rod is connected with the valve plug, and the other end of the valve rod is provided with a valve rod connecting hole. An upper end of the connecting ring is hung on the lever, and a lower end of the connecting ring passes through the valve rod connecting hole to connect the valve rod with the lever.

Further, an end, matched with the valve rod, of the lever is fixedly provided with a connecting beam; and the connecting ring is provided with an annular connecting body which is hung on the connecting beam after passing through the valve rod connecting hole. Preferably, a peripheral wall of the connecting beam is provided with a limiting groove which is in fit with the connecting ring, and the connecting ring is hung inside the limiting groove. Preferably, the connecting beam is provided with a beam connecting hole, and the connecting ring passes through the valve rod connecting hole and the beam connecting hole, respectively.

Further, the annular body includes an arc-shaped hook portion hung on the connecting beam, and a lifting portion matched with the valve rod connecting hole. The arc-shaped hook portion is matched with a radian of an outer peripheral wall of the connecting beam, and the lifting portion passes through the valve rod connecting hole and is at least partially arranged in a straight rod shape. Preferably, the lifting portion includes a straight section in the middle, and a first curved section and a second curved section which are connected to both ends of the straight section and are bent upwards.

Further, the annular connecting body further includes a first connecting section connected between the arc-shaped hook portion and the first curved section, and a second connecting section connected between the arc-shaped hook portion and the second curved section. Preferably, the arc-shaped hook portion, the first connecting section, the lifting portion, and the second connecting section are connected end to end to form the connecting ring with an elongated ring-shape, and the first connecting section or the second connecting section is provided with an opening.

Further, the connecting ring is made of an elastic material. The opening is elastically deformable, and the opening can be opened or closed under the action of its own elasticity. Or, the connecting ring is made of a non-elastic material, and the opening is closed by a closing mechanism after the valve rod is connected with the lever by the annular body.

Further, the valve rod connecting hole is a through hole transversely penetrating along a radial direction of the valve rod and formed at an end of the valve rod. The valve rod connecting hole includes a cylindrical hole having a constant inner diameter and located in the middle and tapered holes located at both ends of the cylindrical hole and gradually expanding outward from inside to outside.

Further, an end, matched with the valve plug component, of the lever is provided with a groove, and the connecting beam is fixedly connected in the groove. Preferably, a projection of a central axis of the valve rod connecting hole intersects with a projection of the connecting beam on the same plane.

Further, the connecting ring includes a set of connected rings, and a structure of the connecting ring gradually extending outwardly from an innermost ring to an outermost ring is like a paper clip structure. The outermost ring is respectively in hook connection with the lever and the valve plug component. Or, the connecting ring includes a plurality of chain links in the shape of a ring which are connected in series to form a chain-like connecting ring. A chain link at an upper end of the connecting ring is connected with the lever, and a chain link at a lower end of the connecting ring is connected with the valve plug component.

A second aspect of the present application provides a washing machine provided with the centrifugal drainage mechanism.

After adopting the above technical solution, the present invention has the following beneficial effects compared with the prior art.

According to the centrifugal drainage mechanism provided by the present application, the lever and the valve plug component are in connection through the connecting ring. The following problems are effectively solved. A lever and a valve plug component of the existing centrifugal drainage mechanism are hinged through a shaft and a shaft hole, the valve plug component is affected by a biasing force of lever tension, so that the position of a valve plug cannot correspond well to a water drainage hole, resulting in failure of the valve plug, affecting the sealing effect of an inner cylinder. According to the centrifugal drainage mechanism provided by the present application, the valve plug component is affected by the biasing force of the tension of the lever, and the position of the valve plug can always be kept to correspond to the position of the water drainage hole in a normal state, so that deviation does not occur, thereby improving the sealing performance and the reliability of the centrifugal drainage mechanism.

Specific embodiments of the present invention are further described in detail below with reference to the accompanying drawings.

### BRIEF DESCRIPTION OF THE DRAWINGS

In the drawings:
FIG. 1 is a sectional structural schematic view of a washing machine in an embodiment of the present invention;
FIG. 2 is a structural schematic view at an angle of a laundry lifting device in an embodiment of the present invention;
FIG. 3 is a schematic cross-sectional view at an angle of the laundry lifting device in the embodiment of the present invention;
FIG. 4 is a schematic cross-sectional view of another angle of the laundry lifting device in the embodiment of the present invention;
FIG. 5 is an enlarged schematic view of a partial structure at a position where a lever and a valve rod are in contact in an embodiment of the present invention;
FIG. 6 is a schematic view of an internal structure of the laundry lifting device after a lifting rib shell and a mounting cover plate being disassembled in the embodiment of the present invention;
FIG. 7 is a sectional structural schematic view of a laundry lifting device in an embodiment of the present invention;
FIG. 8 is a schematic view of an internal structure of the laundry lifting device after a lifting rib shell and a mounting cover plate being disassembled in the embodiment of the present invention;
FIG. 9 is an enlarged partial cross-sectional view of a laundry lifting device in an embodiment of the present invention;
FIG. 10 is a structural schematic diagram of a laundry lifting device without a lifting rib shell in an embodiment of the present invention;
FIG. 11 is a sectional structural schematic view of a laundry lifting device in an embodiment of the present invention;
FIG. 12 is a schematic view of an internal structure of the laundry lifting device after a lifting rib shell and a mounting cover plate being disassembled in the embodiment of the present invention;
FIG. 13 is an enlarged view of a partial structure of a centrifugal drainage mechanism in an embodiment of the present invention;
FIG. 14 is a sectional structural schematic view of a laundry lifting device in an embodiment of the present invention;
FIG. 15 is a schematic view of an internal structure of the laundry lifting device after a lifting rib shell and a mounting cover plate being disassembled in the embodiment of the present invention;
FIG. 16 is an enlarged view of a partial structure of a centrifugal drainage mechanism in an embodiment of the present invention;
description of main components in the figures: 1, inner cylinder; 2, inner cylinder door; 3, machine door; 4, laundry lifting device; 41, lifting rib shell; 411, spray hole; 42, mounting cover plate; 421, bracket; 4211, threaded connection groove; 422, annular limiting groove; 5, centrifugal drainage mechanism; 51, centrifugal component; 52, valve plug component; 521, valve plug; 522, valve rod; 5221, abutting contact portion; 5222, valve rod connecting hole; 523, spring; 5231, annular pressing plate; 524, rotating shaft; 5204, ball joint; 525, valve plug mounting seat; 53, lever; 531, connecting part; 532, power arm; 533, resistance arm; 5331, groove; 5332, ball joint housing; 5333, connecting beam; 534, rotating shaft hole; 535, avoidance hole; 536, rolling element; 54, limiting structure; 541, first limiting plate; 542, second limiting plate; 543, reinforcing rib; 551, first retaining wall; 552, second retaining wall; 553, third retaining wall; 554, fourth retaining wall; 561, first clamping wall; 562, second clamping wall; 563, third clamping wall; 564, fourth clamping wall; 565, connecting rib; 57, connecting ring; 571, arc-shaped hook portion; 572, lifting portion; 573, first connecting section; 574, second connecting section; 575, opening; 6, rotating shaft; 61, fixed support; 7, motor shaft; 8, dynamic sealing structure; 9, driving motor; 10, water inlet pipe; 11, housing; 12, water inlet valve; 13, dispensing box; and 14, outer cylinder.

It should be noted that these drawings and written descriptions are not intended to limit the scope of the concept of the present invention in any way, but rather to illustrate the concept of the present invention for those skilled in the art with reference to specific embodiments.

### DETAILED DESCRIPTION

To make the objectives, technical solutions, and advantages of the solutions of the present invention clearer, the technical solutions in the embodiments are clearly and completely described below in conjunction with the accompanying drawings in the embodiments of the present invention. The following embodiments are used to describe the present invention but are not intended to limit the scope of the present invention.

In the description of the present invention, it should be noted that the orientation or position relationship indicated by the terms such as "upper", "lower", "front", "rear", "left", "right", "vertical", "horizontal", "inner", "outer" and the like is the orientation or position relationship shown in the drawings, only for the convenience of describing the present invention and simplifying the description, rather than indicating or implying that the device or element referred to must have a specific orientation and be constructed and operated in a specific orientation, and therefore cannot be understood as a limitation of the present invention.

In the description of the present invention, it should be noted that the terms "mounted", "connected" and "connection" should be understood in a broad sense unless otherwise specified and defined. For example, it can be fixed connection, detachable connection or integrated connection; it can be mechanical connection or electrical connection; and it can be direct connection or indirect connection through intermediate media. For those of ordinary skill in the art, the specific meaning of the above terms in the present invention can be understood according to specific situations.

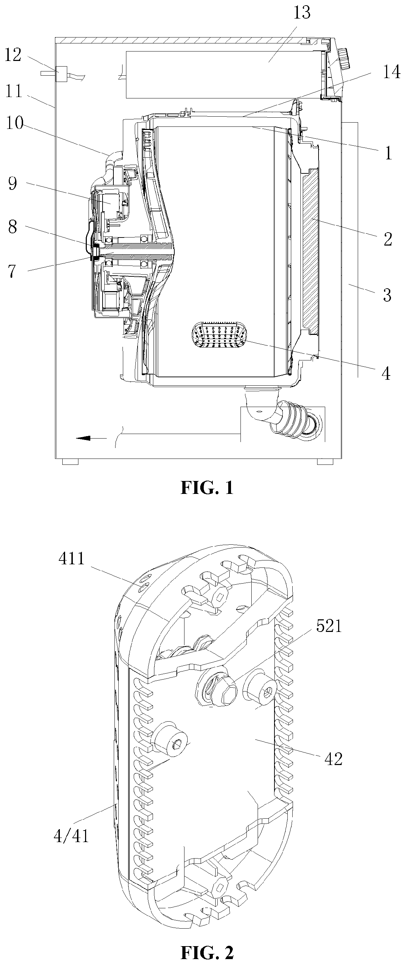

As shown in FIGS. 1 to 6, a washing machine of the present invention includes an outer cylinder 14, and an inner cylinder 1 coaxially disposed within the outer cylinder 14. The inner cylinder 1 is a non-porous inner cylinder, not provided with a water-permeable hole. The inner cylinder 1 is used for independently holding washing water when laundry are washed, and washing/rinsing water does not need to be filled between the inner cylinder 1 and the outer cylinder 14. So the washing water consumption of the washing machine is greatly reduced, and it is impossible for dirt to be adhered between the inner cylinder 1 and the outer cylinder 14. The user health and the user experience are greatly improved, and water resources are greatly saved.

The washing machine of the present invention is a drum washing machine, and may also be a pulsator washing machine. The washing machine is provided with a housing 11, the housing 11 is provided with the outer cylinder 14, and the inner cylinder 1 is coaxially disposed within the outer cylinder 14. During the washing process, the inner cylinder 1 being provided with a laundry lifting device 4 is rotated, the laundry is constantly lifted, dropped to be beaten so as to clean the laundry. The outer cylinder 14 is provided with a central mounting hole where a bearing is fixedly mounted, a motor shaft 7 fixedly connected to the inner cylinder 1 passes through the bearing and is connected to a driving motor 9, and the driving motor 9 drives the inner cylinder 1 to rotate for washing laundry.

In the present invention, as shown in FIG. 1, the motor shaft 7 is a hollow shaft, a water outlet of a water inlet pipe 10 of the washing machine is rotatably and sealingly connected to the hollow shaft through a dynamic sealing structure 8, and water is fed into the interior of the inner cylinder 1 through the motor shaft 7. A water inlet of the water inlet pipe 10 is provided with a water inlet valve 12 for controlling the opening and closing of the water inlet. A first water outlet of the water inlet valve 12 is connected with the water inlet pipe 10, and a second water outlet communicates with a dispensing box 13 of the washing machine for dispensing an additive into the interior of the washing machine.

In the present invention, an inner cylinder door 2 is installed on an opening of the front of the inner cylinder 1 for opening and closing the door, thereby the inner cylinder 1 is of a sealed compartment, and an openable/closable machine door 3 is mounted on the housing 11.

In the present invention, a peripheral wall of the inner cylinder 1 is provided with a water drainage hole, and a centrifugal drainage mechanism 5 is arranged at the water drainage hole for normally sealing the water drainage hole. In a dewatering program and/or a draining program, the washing machine rotates at a high speed, and the centrifugal drainage mechanism 5 opens the water drainage hole under the action of centrifugal force for draining water.

The present invention is further described in detail below with reference to the embodiments.

### Embodiment 1

As shown in FIGS. 1 to 6, this embodiment provides a centrifugal drainage mechanism to solve the problem of the existing centrifugal drainage mechanism. For the existing the centrifugal drainage mechanism, a lever 53 is hinged with a valve plug 521 through a shaft and a shaft hole, a valve plug component 52 can be subjected to a biasing force of lever tension, so that the position of the valve plug 521 cannot align well with the position of a water drainage hole, resulting in failure of the role the valve plug 521, and affecting the sealing effect of an inner cylinder.

Specifically, this embodiment provides a centrifugal drainage mechanism 5 for a washing machine, including: a centrifugal component 51 moving under the action of centrifugal force; a valve plug component 52 normally sealing a water drainage hole on an inner cylinder 1 of a washing machine; and a lever 53. A middle of the lever 53 is rotatably supported and fixed, one end of the lever 53 is fixedly connected to the centrifugal component 51, and the other end of the lever 53 is pressed against the valve plug component 52 to be in contact with the valve plug component 52. Under the action of centrifugal force, the centrifugal component 51 presses the lever 53, so the end, matched with the valve plug component 52, of the lever 53 is driven to rotate in a direction close to a center of the inner cylinder 1, and the valve plug component 52 moves accordingly to open the water drainage hole.

Specifically, in this embodiment, the lever 53 and the valve plug component 52 are only in contact. The valve plug component 52 is closed at the water drainage hole under the pressure of the lever 53 in an initial state. Under the action of centrifugal force, the centrifugal component 51 moves in a radial direction of the inner cylinder 1 away from the center of the inner cylinder 1, the centrifugal component 51 presses the end, matched with the valve plug component 52, of the lever 53 to rotate in a direction close to the center of the inner cylinder 1, and the valve plug component 52 automatically moves upwards accordingly in a direction close to the center of the inner cylinder 1 to open the water drainage hole.

In the present application, the valve plug component 52 is only in contact with the lever 53, and is affected by a biasing force of the tension of the lever 53, so that it can be ensured that the valve plug component 52 is always in a position for sealing the water drainage hole in the inner cylinder, thereby improving the sealing performance. The following problem is avoided. Provided that the lever 53 is hinged with the valve plug 521 through a shaft and a shaft hole, the valve plug component 52 can be affected by the biasing force of lever tension, so that the position of the valve plug 521 cannot align well to the water drainage hole, resulting in failure of the role of the valve plug 521, affecting the sealing effect of the inner cylinder.

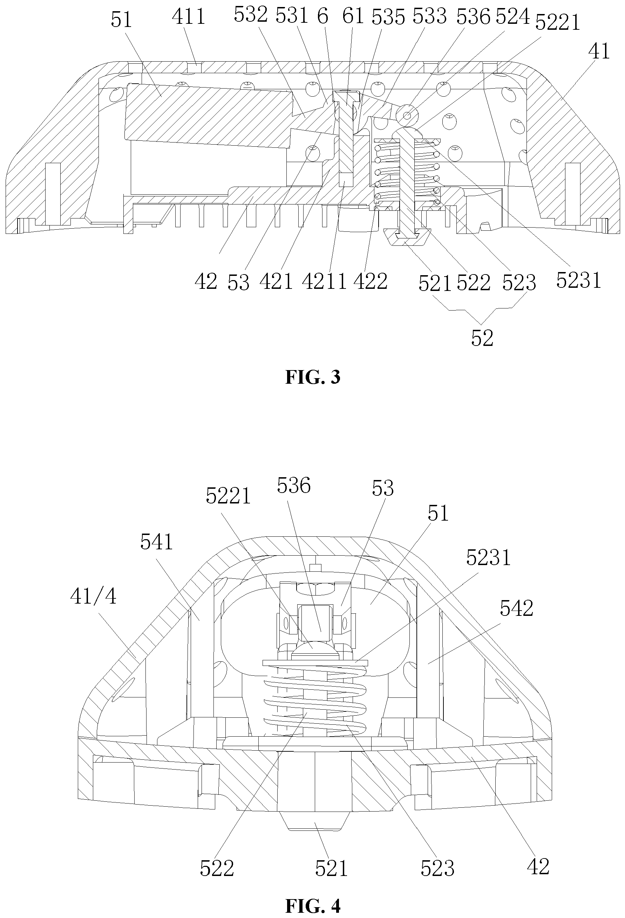

Further, as shown in FIGS. 3 to 5, the valve plug component 52 includes: a valve plug 521 normally sealed at a water drainage hole of a washing machine, a valve rod 522, and an elastic element. An upper end of the valve rod 522 is in contact with an end of the lever 53, and is limited under the lever 53, and a lower end of the valve rod 522 is connected to the valve plug 521. The elastic element is configured to exert an upward elastic pushing or pulling force on the valve rod 522, so as to drive the valve plug 521 to move upward to open the water drainage hole when the end, matched with the valve rod 522, of the lever 53 rotates upwards.

By exerting an upward elastic pushing or pulling force on the valve rod 522 by the elastic element, when the centrifugal component 51 is not subjected to a centrifugal force, the valve rod 522 and the lever 53 are kept in contact, ensuring that the valve plug 521 is always sealed at the water drainage hole in a normal state. The centrifugal component 51 pressing the valve rod 522 moves upward under the action of centrifugal force, and the valve rod 522 moves upward accordingly under the action of the elastic element, thereby causing the valve plug 521 to move upward to open the water drainage hole to drain water out.

Preferably, as shown in FIGS. 3 to 6, the elastic element includes a compression spring 523 sleeving the valve rod 522, and an upper end of the compression spring 523 is limited and connected to the valve rod 522. The compression spring 523 can play a role of adjusting the axis of the valve rod 522, thereby he position of the valve plug 521 is adjusted by itself. So it is ensured that the valve plug 521 is always in a position aligned with the water drainage hole on the inner cylinder, thereby improving the sealing performance.

The elastic element is not limited to the compression spring 523, and may also be a tension spring. An upper end of the tension spring is fixed, and a lower end of the tension spring is connected to the valve rod 522, so that an upward elastic tension is exerted on the valve rod 522. Preferably, in order to reduce the interference between components, the elastic element 523 of the present application adopts a compression spring 523 sleeving the valve rod 522, a lower end of the compression spring 523 is fixed, and an upper end of the compression spring 523 is in limited connection with the valve rod 522, so it is avoided to interfere the cooperation of the lever 53 with the valve rod 522 when the compression spring 523 is disposed above the valve rod 522.

Further, the upper end of the valve rod 522 is provided with an abutting contact portion 5221 having an enlarged outer diameter, and the end of the lever 53 abuts against the abutting contact portion 5221. Through the abutting contact portion 5221 having an enlarged outer diameter and disposed on the upper end of the valve rod 522, the area of the upper end of the valve rod 522 is increased, so that the contact between the valve rod 522 and the lever 53 can be made easier. Provided that the area of the upper end of the valve rod 522 is too small to be in contact with the lever 53, the valve plug 521 fails.

Further, as shown in FIGS. 3 to 5, the valve rod 522 includes a valve rod body having a rod shape and an abutting contact portion 5221 integrally disposed at the upper end of the valve rod 522,. The abutting contact portion 5221 may be of a flat cylindrical structure having a circular cross section and an enlarged outer diameter, or a flat prism structure having other polygonal shapes in cross section. An upper surface of the abutting contact portion 5221 may be a flat surface or a curved surface.

Preferably, in this embodiment, the upper surface of the abutting contact portion 5221 has a curved surface structure with an arc shape. Through the arrangement of the upper surface of the abutting contact portion 5221 as the curved surface structure, the lever 53 is in point contact with the abutting contact portion 5221, so the friction resistance is reduced, the wear is reduced, and the service life of the centrifugal drainage mechanism 5 is effectively prolonged.

Further, a lower surface of the abutting contact portion 5221 has a flat-walled structure, the compression spring 523 sleeves the valve rod 522, and the upper end of the compression spring 523 compressively abuts against the lower surface of the abutting contact portion 5221. Preferably, as shown in FIGS. 3 to 5, an annular pressing plate 5231 is fixedly connected to the upper end of the compression spring 523, and the annular pressing plate 5231 abuts against the lower surface of the abutting contact portion 5221. An area of the annular pressing plate 5231 is much larger than a cross-sectional area of the abutting contact portion 5221, so that the compression spring 523 can more stable support the valve rod 522 and is not easily out of contact with the valve rod 522, improving the reliability of the cooperation of the valve rod 522 with the compression spring 523.

Further, as shown in FIGS. 3, 5 and 6, the lever 53 includes: a power arm 532 fixedly connected to the centrifugal component 51; a resistance arm 533 pressed against the valve plug component 52 and being in contact with the valve plug component 52; and a rolling element 536 attached on an end of the resistance arm 533. The rolling element 536 is in point contact with the valve plug component 52.

According to the centrifugal drainage mechanism 5 of the present application, the upper end of the valve rod 522 is provided with the abutting contact portion 5221 having an enlarged outer diameter, and the upper surface of the abutting contact portion 5221 has a curved surface structure with an arc shape. The rolling element 536 is disposed at the end of the resistance arm 533 of the lever 53, and the rolling element 536 is in point contact with the abutting contact portion 5221.

By adopting the above design, the valve plug component 52 and the lever 53 are in point contact, the contact area is reduced, the frictional resistance is greatly reduced, the wear is reduced, the service life of the centrifugal drainage mechanism 5 is effectively prolonged. The valve plug component 52 and the lever 53 are in rolling contact, so that the operation is stable, the noise is reduced, and the service experience is better.

Further, as shown in FIGS. 3 to 5, the rolling element 536 is a roller mounted on the end of the resistance arm 533 of the lever 53. The roller is used as a rolling structure for realizing the rolling contact between the lever 53 and the valve plug component 52, so that the structure is simple, the cost is low, and the flexibility is high. Preferably, an outer circumference of the roller is provided with a rubber coat or a rubber pad. Through the rubber coat or the rubber pad, wear at a position where the roller is matched with the valve rod 522 is effectively reduced, thereby the wear resistance of the roller is improved, a buffering and shock-absorbing role can also be achieved, and noise is effectively reduced.

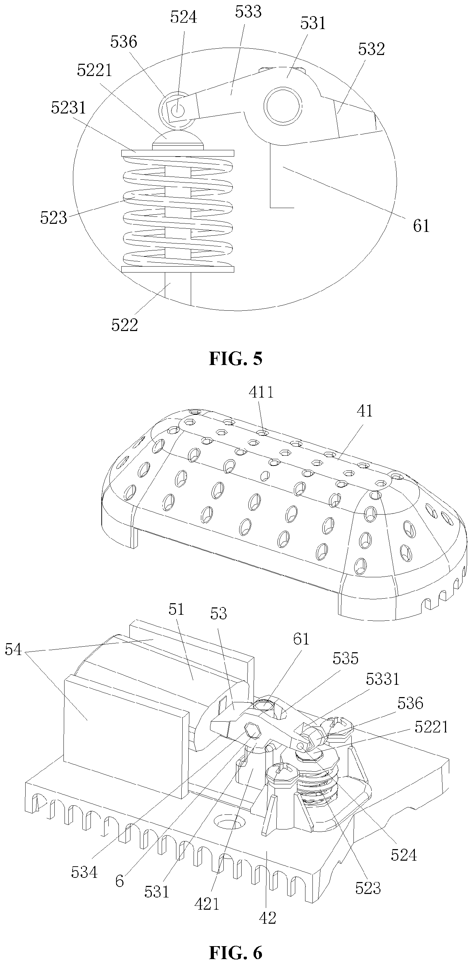

Further, as shown in FIG. 6, the resistance arm 533 of the lever 53 is provided with a notch groove 5331 for accommodating and mounting the rolling element 536; and the rolling element 536 is rotatably arranged within the notch groove 5331.

Specifically, a connecting rotating shaft 524 is fixedly attached within the notch groove 5331, and the rolling element 536 is rotatably connected to the connecting rotating shaft 524. The notch groove 5331 includes a first side wall and a second side wall, the connecting rotating shaft 524 is fixedly connected between the first side wall and the second side wall, and the roller is rotatably mounted on the connecting rotating shaft 524.

As shown in FIGS. 1 to 6, this embodiment further provides a laundry lifting device 4, including: a lifting rib shell 41 provided with a cavity having an opening; a mounting cover plate 42 mounted at the opening of the lifting rib shell 41; and the centrifugal drainage mechanism 5 arranged within the lifting rib shell 41, and fixedly mounted on the mounting cover plate 42.

In the present application, the centrifugal drainage mechanism 5 is hidden in the lifting rib shell 41, so the overall aesthetics are improved, the inner space of the lifting rib shell 41 is fully utilized, and the space of an inner cylinder occupied is reduced. The washing capacity of the inner cylinder is effectively improved.

Further, as shown in FIGS. 3 to 6, the mounting cover plate 42 is provided with a through hole for allowing the valve rod 522 of the valve plug component 52 to pass through. The upper end of the valve rod 522 is in contact with the lever 53 in the lifting rib shell 41, and the lower end of the valve rod 522 is extended out of the mounting cover plate 42 via the through hole to be connected with the valve plug 521. An elastic element is arranged between the mounting cover plate 42 and the valve rod 522, the elastic element being in compressive state is arranged between the mounting cover plate 42 and the valve rod 522. Preferably, the elastic element is a compression spring 523 fixedly attached on the mounting cover plate 42 and sleeving the valve rod 522, one end of the compression spring 523 is fixedly connected to the mounting cover plate 42, and the other end of the compression spring 523 compressively abuts against the valve rod 522. More preferably, as shown in FIG. 3, an upper surface of the mounting cover plate 42 is provided with an annular limiting groove 422, a lower end of the compression spring 523 is limited in the annular limiting groove 422, and the annular limiting groove 422 is in fit with the compression spring 523 in limiting manner. Thereby the stability of the compression spring 523 is ensured, and the compression spring 523 is prevented from being offset in position. Further preferably, an annular support plate is fixedly connected to the lower end of the compression spring 523, and the annular support plate is limited and fixed in the annular limiting groove 422 to provide more stable support for the compression spring 523. Further preferably, the compression spring 523 is also sleeved with a flexible sheath, and the flexible sheath serves to protect the compression spring 523 while effectively blocking the impact of a water flow and impurities on the compression spring 523. Thereby it is avoided that the compression spring 523 fails to work by rust or being attached with too many impurities.

As shown in FIG. 1, this embodiment also provides a washing machine provided with the centrifugal drainage mechanism 5 or the laundry lifting device 4. Further, the washing machine includes: an inner cylinder 1, wherein a water drainage hole is formed in a side wall of the inner cylinder 1, and the laundry lifting device 4 is installed on an inner wall of the inner cylinder 1 at the water drainage hole. The centrifugal drainage mechanism 5 of the washing machine can close/open the water drainage hole. Preferably, the washing machine further includes an inner cylinder door 2 openably/closably mounted in an opening of the inner cylinder 1. The inner cylinder door 2 and the inner cylinder 1 form a separate washing chamber for separately holding washing water in washing laundry, when the inner cylinder door 2 is closed.

### Embodiment 2

As shown in FIGS. 1 to 6, in this embodiment, the centrifugal drainage mechanism 5 is improved on the basis of Embodiment 1, mainly solving the problem of no restraining force between the lever 53 and the valve plug component 52 in Embodiment 1. When the centrifugal component 51 is subjected to excessive centrifugal force or other factors, the lever 53 and the valve plug component 52 are out of contact.

In particular, this embodiment is achieved by following several implementations

### First implementation:

a flexible connecting portion is connected between the resistance arm 533 of the lever 53 and the valve rod 522, the flexible connecting portion has a certain extension length. The flexible connecting portion may be a pull cord having a certain length. Through the arrangement of the flexible connecting portion, the phenomenon is effectively avoided that the lever 53 and the valve plug component 52 are out of contact when the centrifugal component 51 is subjected to excessive centrifugal force or other factors.

In a natural state, the pull cord is in a relaxed state, that is, there is a certain safety margin between the lever 53 and the valve plug component 52, so as to ensure that the lever 53 does not generate a biasing pulling force on the valve plug component 52. So, it is avoided that the position of the valve plug 521 does not correspond to the water drainage hole, affecting the sealing effect of the inner cylinder.

Preferably, the flexible connecting portion may be a pull cord with a certain elasticity. The pull cord has better shrinkage performance, so that the pull cord does not need to be arranged too long, and by virtue of the elasticity of the pull cord itself, the biasing pulling force of the lever 53 on the valve plug component 52 can be counteracted.

### Second implementation:

a sliding limiting rod is disposed between the resistance arm 533 of the lever 53 and the valve rod 522, and two ends of the sliding limiting rod are respectively limited within the lever 53 and the valve rod 522.

Specifically, peripheral walls of both ends of the sliding limiting rod are respectively provided with an annular limiting boss. An end of the resistance arm 533 is provided with a limiting through hole, a top of the valve rod 522 is provided with a limiting through hole for allowing the sliding limiting rod to pass through, and the valve rod 522 is disposed to be hollow inside. An inner diameter of the limiting through hole is greater than an outer diameter of a sliding limiting rod body, and is smaller than an outer diameter of the annular limiting boss, such that the sliding limiting rod is limited and connected between the lever 53 and the valve rod 522. It is ensured that the lever 53 is not detached from the valve plug component 52 when the centrifugal component 51 is subjected to excessive centrifugal force or other factors.

### Third implementation:

a top of the valve rod 522 is provided with a limiting cover, the limiting cover is of a hemispherical concave structure with an opening at a top, which is similar to a bowl-shaped structure, or the limiting cover may also be of a trumpet-shaped structure with an upward opening. Both the abutting contact portion 5221 and the rolling element 536 disposed at the end of the lever 53 are covered by the limiting cover. The limiting cover is fixedly connected to a peripheral wall of the valve rod 522 under the abutting contact portion 5221. The limiting cover is provided with a limiting surface with a hemispherical concave which is in fit with the rolling element 536 described in Embodiment 1 for limiting the rolling element 536 therein. So the rolling element 536 is prevented from being detached from the abutting contact portion 5221 when the rolling element 536 is matched with the abutting contact portion 5221 at the top of the valve rod 522. There is a certain gap distance between the limiting surface and the rolling element 536 to avoid interference with the normal movement of the lever 53.

In another alternative solution, the above limiting cover may be disposed on the end of the lever 53, the limiting cover is of a hemispherical concave structure with a lower opening, which is similar to a bowl-shaped structure, or the limiting cover may be of a trumpet-shaped structure with a downward opening. both the top of the valve rod 522 and the rolling element 536 are covered by the limiting cover. The limiting cover is fixedly connected to the end of the resistance arm 533 of the lever 53. The limiting cover is provided with a limiting surface with a hemispherical concave which is in fit with the abutting contact portion 5221 described in Embodiment 1 for limiting the abutting contact portion 5221 therein in a matched mode. There is a certain gap distance between the limiting surface and an outer wall of the abutting contact portion 5221, the rolling element 536 is effectively prevented from coming out of contact with the abutting contact portion 5221 when being contact with the abutting contact portion 5221 at the top of the valve rod 522.

Preferably, the limiting cover in the above solution may be provided as a ball joint housing with a larger cavity, rather than a hemispherical concave structure. The ball joint housing of the limiting cover has a limiting opening in its lower end and the shape of the ball joint housing is between a non-hemispherical shape and an entire spherical shape. The limiting cover covers both the abutting contact portion 5221 and the rolling element 536, and an inner diameter of the limiting opening of the ball joint housing structure is greater than an outer diameter of the valve rod 522 and is smaller than an outer diameter of the abutting contact portion 5221. Through the above design, the limiting cover performs limiting in multiple directions to prevent the rolling element 536 from coming out of contact with the abutting contact portion 5221. There is a certain gap distance between an inner circumferential wall of the ball joint housing structure and an outer circumferential wall of the abutment contact portion 5221, as well as between the limiting opening and an outer circumferential wall of the valve rod 522, so there is a fault-tolerant space between the lever 53 and the valve plug component 52, so as to prevent the lever 53 from causing a biasing pulling force on the valve plug component 52.

In the first implementation and the second implementation, the valve rod 522 and the lever 53 are in limited connection in a vertical direction to prevent the lever 53 from being detached from the abutting contact portion 5221 of the valve rod 522. In the third implementation, the valve rod 522 and the lever 53 are limited in a horizontal direction, effectively preventing the rolling element 536 from being severely misaligned with the abutting contact portion 5221 in the horizontal direction to be out of contact.

The above three implementations may be used alone or in any combination. By the combination of the implementations, the lever 53 and the abutting contact portion 5221 of the valve rod 522 may be limited in multiple directions to ensure that the valve plug component 52 is not affected by a biasing pulling force of the lever 53 while effectively preventing the valve plug component 52 and the lever 53 from coming out of contact.

### Embodiment 3

As shown in FIGS. 1 to 6, this embodiment provides a laundry lifting device 4 for a washing machine on the basis of Embodiment 1 and Embodiment 2, mainly describing the connection between a middle part of the lever 53 and the mounting cover plate 42.The problems are solved in poor reliability and low stability of the connection between the lever 53 of the existing centrifugal drainage mechanism 5 and the mounting cover plate 42.

Specifically, this embodiment describes a laundry lifting device 4 for a washing machine, including: a lifting rib shell 41 provided with an cavity inside with an opening; a mounting cover plate 42 mounted at the opening of the lifting rib shell 41; and a centrifugal drainage mechanism 5. The centrifugal drainage mechanism includes a centrifugal component 51, a valve plug component 52, and a lever 53 connected between the centrifugal component 51 and the valve plug component 52, which are disposed within the lifting rib shell. The valve plug component 52 includes a valve plug 521 normally sealed at a water drainage hole of an inner cylinder 1. The centrifugal component 51 moves away from the center in a radial direction of the cylinder under the action of centrifugal force, and the valve plug component 52 is driven to move close to the center in the radial direction of the inner cylinder 1 by the centrifugal component 51 under the action of the lever 53 to open the water drainage hole.

In this embodiment, as shown in FIGS. 3 and 5 and 6, a middle of the lever 53 is provided with a rotating fulcrum, the rotating fulcrum is rotatably connected to a rotating shaft 6, and the rotating shaft 6 is supported and fixed to the mounting cover plate 42 by a fixed support 61.

According to the laundry lifting device 4 for a washing machine of this embodiment, the rotating shaft 6 is fastened to the mounting cover plate 42 through the fixed support 61. The rotating shaft 6 is efficiently and reliably assembled on and the mounting cover plate 42. The laundry lifting device has the advantages of high reliability and high stability, and effectively solves the problems of poor reliability and low stability of the existing centrifugal drainage mechanism 5.

As shown in FIGS. 2 to 6, the laundry lifting device 4 in this embodiment is composed of two parts, one is the lifting rib shell 41 and the other is the mounting cover plate 42, which can be connected by screws or bolts and fixing holes to become an integration. The mounting cover plate 42 or the lifting rib shell 41 is provided with a fixing column or a fixing hole, the laundry lifting device 4 is connected to the inner cylinder 1 by screws/bolts, and the valve plug component 52 of the centrifugal drainage mechanism 5 disposed in the lifting rib shell 41 corresponds to the water drainage hole of the inner cylinder 1.

As shown in FIG. 1, FIG. 2 and FIG. 6, the lifting rib shell 41 is provided with spray holes 411, so that water can be sprayed on laundry through the spray holes 411 after being lifted to a high place. The lifting rib shell 41 or the mounting cover plate 42 is provided with a water inlet for communicating an interior of the lifting rib shell 41 with an interior of the inner cylinder 1.

Further, as shown in FIG. 3, FIG. 5, and FIG. 6, the rotating shaft 6 is provided with a fixing portion matched with the fixed support 61, and the fixed support 61 is fixedly connected with the fixing portion to support and fix the rotating shaft 6 to the mounting cover plate 42. The fixing portion may be a partial structure of the fixed support 61, such as a connecting hole formed in the rotating shaft 6 or a clamping platform or a clamping slot integrally formed in the rotating shaft 6. The fixed support 61 may be fixedly connected to the connecting hole or the clamping platform or the clamping slot to support and fix the rotating shaft 6 to the mounting cover plate 42.

Further, as shown in FIGS. 3 and 6, in this embodiment, the fixed support 61 is a screw having an extended length, and the fixing portion is a threaded through hole formed in the rotating shaft 6, and the screw passes through the threaded through hole to support and fix the rotating shaft 6 at a set height position above the mounting cover plate 42. By adopting the screw as the fixed support 61 for fixedly connecting the rotating shaft 6 and the mounting cover plate 42, it is quickly and efficiently to assemble, and easily disassemble. Not only the connection is firm and reliable, and not easy to be loosened, but also the structure is simple, the cost is low, and the use and popularization are easy.

In the above solution, the entire rotating shaft 6 may be provided as a cylindrical structure having a relatively great diameter to easily form the threaded through hole, so that the threaded through hole can be directly formed in the rotating shaft 6. Or, an extended connecting part 531 extending outward may be also formed on an outer wall of the rotating shaft 6, and the threaded through hole is formed in the extended connecting part 531.

Further, in this embodiment, both ends of the rotating shaft 6 are respectively in fit with the lever 53 in rotating manner, the threaded through hole is formed in a middle of the rotating shaft 6, and the screw is fixedly connected at the middle of the rotating shaft 6 for support. Preferably, the middle of the rotating shaft 6 is thickened, and the threaded through hole is formed in the thickened middle of the rotating shaft 6. By the above arrangement, the strength of the rotating shaft 6 can be effectively ensured, and the problems are effectively solved that the strength of the rotating shaft 6 is reduced, and the rotating shaft 6 is easily deformed during use due to the formation of the threaded through hole.

Further, as shown in connection with FIGS. 3, 5 and 6, a bracket 421 is fixed on the mounting cover plate 42, the bracket 421 is provided with a threaded connection groove 4211 having an extended length and matched with the screw, and the screw is fixedly connected in the threaded connection groove 4211. The bracket 421 is of a pillar structure fixedly attached on the mounting cover plate 42, a cylindrical groove is formed at a position corresponding to the screw in the pillar structure, and an inner wall of the cylindrical groove is provided with threads to form the threaded connection groove 4211. An inner diameter of the threaded connection groove 4211 is matched with an outer diameter of the screw. The screw passes through the threaded through hole in the rotating shaft 6, and an end of the screw extends into and is threadedly and fixedly connected in the threaded connection groove 4211.

In the above solution, the screw is fixedly connected to the rotating shaft 6 and the mounting cover plate 42 by threaded connection, so that the structure is simple, the connection is quick and efficient, and the entire laundry lifting device 4 has higher reliability and higher stability.

Preferably, as shown in FIGS. 3 and 6, the bracket 421 is used for supporting and fixing the rotating shaft 6, and located at a middle of the lever 53 for supporting the lever 53. In this embodiment, an upper end face of the bracket 421 is provided with an arc-shaped support surface matched with the lever 53. Through the above design, the bracket 421 provides a more stable and gentle supporting force for the lever 53, and the bracket 421 is located under the lever 53 for support and shares part of the weights of the centrifugal component 51 and the lever 53, so that it is effectively avoided that the rotating shaft 6 bears too much pressure and is prone to fracture or deformation when only the rotating shaft 6 provides full support for the lever 53.

Preferably, the bracket 421 and the mounting cover plate 42 are integrated as a whole, and the bracket 421 is of a pillar structure with a certain extension length which is integrally formed on the mounting cover plate 42 by injection molding. The pillar structure has an extended width matched with a width of the lever 53 and supports on a fulcrum position in the middle of the lever 53.

Further, as shown in FIG. 3, FIG. 5, and FIG. 6, the lever 53 includes a connecting part 531 located at a middle fulcrum, the connecting part 531 is provided with a rotating shaft hole 534 matched with the rotating shaft 6 in a first direction, and the connecting part 531 is provided with an avoidance hole 535 for providing a space for the fixed support 61 in a second direction.

Preferably, the first direction is a horizontal direction, the second direction is a vertical direction, and the avoidance hole 535 is a through hole having an elongated cross section which runs through from top to bottom in the connecting part 531 to provide a sufficient space for the screw.

In the above solution, as shown in FIGS. 3 and 6, the avoidance hole 535 effectively provides a space for the screw, so a nut at an end of the screw is hidden in the avoidance hole 535. The end of the screw is prevented from being exposed outside the lever 53, and from easily scratching with other components or interfering with the arrangement of other components. The screw is not visible from the outside by the above design, improving the overall aesthetics.

When the centrifugal drainage valve mechanism is assembled, the connecting part 531 of the lever 53 can be placed at an upper part of the bracket 421, and the threaded connection groove 4211 in the bracket 421 is ensured to correspond to the avoidance hole 535 in the lever 53. The rotating shaft 6 passes through the rotating shaft hole 534 in the lever 53, and the screw passes through the threaded through hole in the rotating shaft 6 to be fixedly connected to the threaded connection groove 4211 in the bracket 421, so that the rotating shaft 6 is fastened to the bracket 421, and the assembling connection is simple and efficient, and has high reliability.

Further, as shown in FIG. 3, FIG. 5, and FIG. 6, the connecting part 531 is a thickened connecting part 531 having an enlarged outer diameter in the middle of the lever 53. The lever 53 further includes a resistance arm 533 and a power arm 532 which are connected to both sides of the thickened connecting part 531, wherein the power arm 532 is connected to the centrifugal component 51, and the resistance arm 533 is connected to the valve plug component 52.

By enlarging the outer diameter of the connecting part 531 to thicken the connecting part 531, the rotating shaft hole 534 and the avoidance hole 535 are formed, meanwhile, the strength of the lever 53 itself is effectively ensured, so that the lever 53 is not easily deformed during use, and the durability is increased. The problems are effectively solved that low strength and indurability of the lever 53 are caused by the rotating shaft hole 534 and the avoidance hole 535.

Further, the thickened connection part 531 is of a cylindrical structure with an enlarged outer diameter and a first extension length L1, and an extension direction of the thickened connection part 531 is perpendicular to a swinging direction of the lever 53.

As shown in FIG. 5, the power arm 532 and the resistance arm 533 are of plate-shaped structures connected on both sides of the thickened connecting part 531 and respectively having a first width H1. The power arm 532 is connected to a lower part of the side, close to the centrifugal component 51, of the thickened connecting part 531, and the power arm 532 is slightly inclined upwards from the thickened connecting part 531 toward the centrifugal component 51, and is fixedly connected to the centrifugal component 51.

As shown in FIGS. 3 to 6, the resistance arm 533 is connected to an upper part of the side, close to the valve plug component 52, of the thickened connecting part 531. The resistance arm 533 is slightly inclined downwards from the thickened connecting part 531 toward the valve plug component 52, and is in contact with the valve plug component 52. The entire lever 53 forms a combination structure like "6" and "9" or two whistle portions superimposed. By the above structure of lever 53, the centrifugal component 51 can more easily drive the valve plug component 52 to move.

Preferably, as shown in FIG. 6, the first width H1 is equal to the first extension length L1, a thickness of the power arm 532 is gradually decreased from the thickened connecting part 531 toward the centrifugal component 51, and a thickness of the resistance arm 533 is gradually decreased from the thickened connecting part 531 toward the valve plug component 52. An end, connected to the thickened connecting part 531, of the power arm 532 or the resistance arm 533 is relatively thicker, so that the structural strength of the power arm 532 or the resistance arm 533 is ensured, and the weight of the entire centrifugal drainage mechanism 5 is effectively reduced while the material cost is saved by the thickness of the power arm 532 or the resistance arm 533 being gradually decreased.

### Embodiment 4

As shown in FIGS. 1 to 6, this embodiment provides a laundry lifting device 4 for a washing machine on the basis of Embodiments 1-3. The main the problems to be solved are as follows: a centrifugal component 51 of a centrifugal drainage mechanism 5 is easily deflected in position due to high speed rotation and vibration of a washing machine, and normal water drainage is affected; and the centrifugal component 51 is deflected for a long period of time to cause deformation of a lifting rib shell 41 made of a plastic material, resulting in poor appearance fit.

The centrifugal drainage mechanism 5 includes a centrifugal component 51 and a valve plug component 52. The centrifugal component 51 generates centrifugal motion on a first moving surface under the action of centrifugal force, to drive the valve plug component 52 to open a water drainage hole formed in a body of an inner cylinder 1 of a washing machine for draining water.

As shown in FIGS. 4 and 6, the laundry lifting device 4 in this embodiment further includes a limiting structure 54 fixedly attached on a mounting cover plate 42, the limiting structure 54 is used for limiting the centrifugal component 51 from generating offset motion deviating from the first moving surface.

In this embodiment, through the limiting structure 54 attached on the mounting cover plate 42, the centrifugal component 51 is limited from generating offset motion deviating from the first moving surface, which can effectively prevent the centrifugal component 51 from being deflected during the high-speed rotation of the washing machine, thereby affecting the normal water drainage of the centrifugal drainage mechanism 5.

Further, the centrifugal component 51 includes a balancing weight that moves along the first moving surface under the action of centrifugal force. Due to high speed rotation and vibration of a washing machine, the position of the balancing weight in the laundry lifting device 4 is very likely to be deflected to affect normal water drainage, and the balancing weight is deflected for a long period of time to cause deformation of a lifting rib shell made of a plastic material, resulting in poor appearance fit.

In this embodiment, the limiting structure 54 includes limiting baffles attached on left and right sides of the balancing weight, and the position of the balancing weight is limited by the limiting baffles attached on the left and right sides of the balancing weight, thereby effectively preventing the balancing weight from being deflected to the left and right sides under the action of an external force.

Further, with reference to FIGS. 4 and 6, the limiting baffles include a first limiting plate 541 and a second limiting plate 542 which are fixedly attached at intervals on the mounting cover plate 42, and a limit space for allowing the balancing weight to be mounted in a limited mode is formed between the first limiting plate 541 and the second limiting plate 542.

Further, as shown in FIGS. 4 and 6, the balancing weight includes a first side wall and a second side wall which are oppositely attached on left and right sides thereof. The first limiting plate 541 is located outside the first side wall and is parallel to the first side wall of the balancing weight. The second limiting plate 542 is located outside the second side wall and is parallel to the second side wall of the balancing weight. There is a certain gap distance between the first limiting plate 541 and the first side wall, and there is a certain gap distance between the second limiting plate 542 and the second side wall, to avoid interference with normal centrifugal movement of the balancing weight in the first moving surface.

Preferably, the first moving surface is parallel to a radial direction of a cylinder body of a washing machine, and the limiting baffles are extended in a direction parallel to the first moving surface and prevent the balancing weight from the left and right deviation relative to the first moving surface. The first limiting plate 541 and the second limiting plate 542 prevent the balancing weight from moving on an offset plane perpendicular to the first moving surface.

Preferably, the first limiting plate 541 and the second limiting plate 542 are integrated with the mounting cover plate 42 by injection molding. In the embodiment of the present invention, the first limiting plate 541, the second limiting plate 542 and the mounting cover plate 42 are manufactured by integral injection molding, and the molding process is simple, and the manufacturing cost is low.

In this embodiment, the first limiting plate 541 and the second limiting plate 542 are integrally formed on the mounting cover plate 42, which is easier to form and easier to process compared with being attached inside the lifting rib shell 41.

Further, the laundry lifting device 4 in this embodiment further includes a reinforcing structure for increasing the strength of the limiting baffles.

Preferably, reinforcing ribs as the reinforcing structure are connected between the limiting baffles and the mounting cover plate 42. A plurality of the reinforcing ribs are provided, and are spaced apart along the length direction of the limiting baffles. Each of the reinforcing ribs includes a first connecting edge and a second connecting edge which are connected and vertical to each other. The first connecting edges are fixedly connected to the limiting baffles, and the second connecting edges are fixedly connected to the mounting cover plate 42.

More preferably, the reinforcing ribs are integrated with the mounting cover plate 42, the first limiting plate 541, and the second limiting plate 542 by injection molding.

In this embodiment, the first limiting plate 541 and the second limiting plate 542 are attached on the left and right sides of the balancing weight, so that left and right shaking of the balancing weight can be effectively limited, thereby preventing the centrifugal component from being damaged due to resonance and the like. It is avoided that the centrifugal component 51 is deflected for a long period of time to cause deformation of the lifting rib shell 41 made of a plastic material, resulting in poor appearance fit.

### Embodiment 5

As shown in FIGS. 1 to 2 and FIGS. 7 to 8, this embodiment provides a laundry lifting device 4 for a washing machine. By fastening the rotating shaft 6 to a mounting cover plate 42 through a fixed support 61, it is achieved to efficiently and fast connect the rotating shaft 6 with the mounting cover plate 42, and the problems are effectively solved poor reliability and low stability of the existing centrifugal drainage mechanism 5.

Specifically, the present application discloses a laundry lifting device 4 for a washing machine, including: a lifting rib shell 41 provided with cavity having an opening; a mounting cover plate 42 mounted at the opening of the lifting rib shell 41; and a centrifugal drainage mechanism 5. The centrifugal drainage mechanism includes a centrifugal component 51 and a valve plug component 52 which are attached within the lifting rib shell, and a lever 53 connected between the centrifugal component 51 and the valve plug component 52. The valve plug component 52 includes a valve plug 521 normally sealed at a water drainage hole of an inner cylinder 1. The centrifugal component 51 moves away from the center in a radial direction of the cylinder under the action of centrifugal force, and the valve plug component 52 moves toward the center in the radial direction of the inner cylinder 1 under the drive of the valve plug component 52 under the action of the lever 53 to open the water drainage hole.

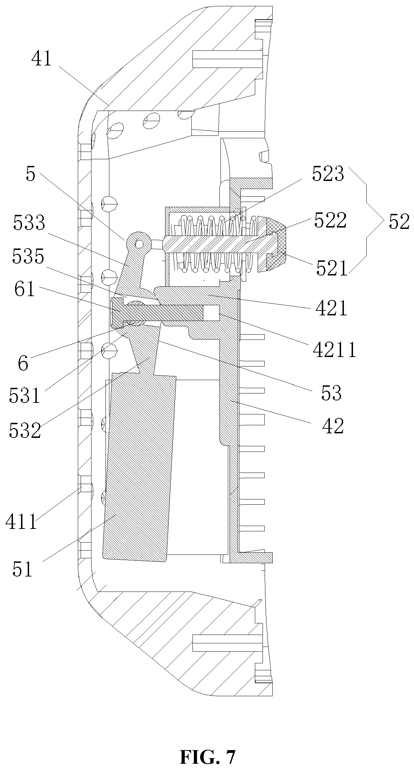

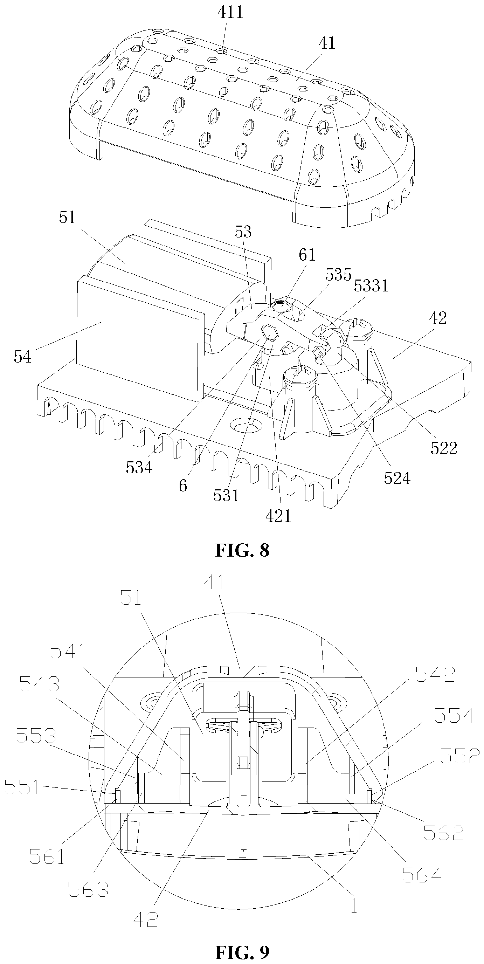

In this embodiment, as shown in FIGS. 7 and 8, a middle of the lever 53 is provided with a rotating fulcrum, the rotating fulcrum is rotatably connected to a rotating shaft 6, and the rotating shaft 6 is fixedly supported on the mounting cover plate 42 by a fixed support 61.

According to the laundry lifting device 4 for a washing machine in this embodiment, by fastening the rotating shaft 6 to the mounting cover plate 42 through the fixed support 61, the rotating shaft 6 is efficiently and fast assembled with the mounting cover plate 42, the connection is stable and reliable. The problems are effectively solved poor reliability and low stability of the existing centrifugal drainage mechanism 5.

As shown in FIG. 2, FIG. 7, and FIG. 8, the laundry lifting device 4 in this embodiment is composed of two parts, one is the lifting rib shell 41 and the other is the mounting cover plate 42, which can be connected by screws or bolts and fixing holes to become an integrated part. The mounting cover plate 42 or the lifting rib shell 41 is provided with a fixing column or a fixing hole, the laundry lifting device 4 is connected to the inner cylinder 1 by screws/bolts, and the valve plug component 52 of the centrifugal drainage mechanism 5 attached in the lifting rib shell 41 corresponds to the water drainage hole of the inner cylinder 1.

As shown in FIG. 1, FIG. 2 and FIG. 8, the lifting rib shell 41 is provided with spray holes 411, so that water can spray on laundry through the spray holes after being lifted to a high place. The lifting rib shell 41 or the mounting cover plate 42 is provided with a water inlet for communicating an interior of the lifting rib shell 41 with an interior of the inner cylinder 1.

Further, as shown in FIGS. 7 and 8, the rotating shaft 6 is provided with a fixing portion matched with the fixed support 61, and the fixed support 61 is fixedly connected with the fixing portion to support and fix the rotating shaft 6 to the mounting cover plate 42. The fixing portion may be a partial structure of the fixed support 61, such as a connecting hole formed in the rotating shaft 6 or a clamping platform or a clamping slot integrally formed in the rotating shaft 6. The fixed support 61 may be fixedly connected to the connecting hole or the clamping platform or the clamping slot to support and fix the rotating shaft 6 to the mounting cover plate 42.

Further, as shown in FIGS. 7 and 8, in this embodiment, the fixed support 61 is a screw having an extended length, and the fixing portion is a threaded through hole formed in the rotating shaft 6, and the screw passes through the threaded through hole to support and fix the rotating shaft 6 at a set height position above the mounting cover plate 42. By adopting the screw as the fixed support 61 for fixedly connecting the rotating shaft 6 and the mounting cover plate 42, it is quickly and efficiently to assemble, and disassemble. Not only the connection is firm and reliable, and not easy to loosen, but also the structure is simple, the cost is low, and the use and popularization are easy.

In the above solution, the entire rotating shaft 6 may be provided as a cylindrical structure having a relatively great diameter to easily form the threaded through hole, so that the threaded through hole can be directly formed in the rotating shaft 6. Or, an extended connecting part extending outward may also be formed on an outer wall of the rotating shaft 6, and the threaded through hole is formed in the extended connecting part.

Further, in this embodiment, both ends of the rotating shaft 6 are respectively in fit with the lever 53 in rotating manner, the threaded through hole is formed in a middle of the rotating shaft 6, and the screw is fixedly connected at the middle of the rotating shaft 6 for support. Preferably, the middle of the rotating shaft 6 is thickened, and the threaded through hole is formed in the thickened middle of the rotating shaft 6. By the above arrangement, the strength of the rotating shaft 6 can be effectively ensured, and the problems are effectively solved that the strength of the rotating shaft 6 is reduced, and the rotating shaft 6 is easily deformed during use due to the formation of the threaded through hole.

Further, as shown in FIGS. 7 and 8, a bracket 421 is fixedly attached on the mounting cover plate 42, the bracket 421 is provided with a threaded connection groove 4211 having an extended length and matched with the screw, and the screw is fixedly connected in the threaded connection groove 4211. The bracket 421 is of a pillar structure fixedly attached on the mounting cover plate 42, and a cylindrical groove is formed at a position corresponding to the screw in the pillar structure, and an inner wall of the cylindrical groove is provided with threads to form the threaded connection groove 4211. An inner diameter of the threaded connection groove 4211 is matched with an outer diameter of the screw. The screw passes through the threaded through hole in the rotating shaft 6, and an end of the screw extends into and is threadedly and fixedly connected in the threaded connection groove 4211.

In the above solution, the screw is fixedly connected to the rotating shaft 6 and the mounting cover plate 42 by threaded connection, so that the structure is simple, the connection is quick and efficient, and the entire laundry lifting device 4 has higher reliability and higher stability.

Preferably, the bracket 421 is used for supporting and fixing the rotating shaft 6, and located at a middle of the lever 53 for supporting the lever 53. In this embodiment, an upper end face of the bracket 421 is provided with an arc-shaped support surface matched with the lever 53. Through the above design, the bracket 421 provides a more stable and gentle supporting force for the lever 53, and the bracket 421 is located under the lever 53 for support and shares part of the weights of the centrifugal component 51 and the lever 53, so that it is effectively avoided that the rotating shaft 6 bears too much pressure and is prone to fracture or deformation when only the rotating shaft 6 provides full support for the lever 53.

Preferably, the bracket 421 and the mounting cover plate 42 are integrated as a whole, and the bracket 421 is of a pillar structure with a certain extension length which is integrally formed on the mounting cover plate 42 by injection molding. The pillar structure has an extended width matched with a width of the lever 53 and supports on a fulcrum position in the middle of the lever 53.

Further, as shown in FIGS. 7 and FIG. 8, the lever 53 includes a connecting part 531 located at a middle fulcrum, the connecting part 531 is provided with a rotating shaft hole 534 matched with the rotating shaft 6 in a first direction, and the connecting part 531 is provided with an avoidance hole 535 for providing a space for the fixed support 61 in a second direction.

Preferably, the first direction is a horizontal direction, the second direction is a vertical direction, and the avoidance hole 535 is a through hole having an elongated cross section which runs through from top to bottom in the connecting part 531 to provide a sufficient space for the screw.

In the above solution, as shown in FIGS. 7 and 8, the avoidance hole 535 effectively provides a space for the screw, so a nut at an end of the screw is hidden in the avoidance hole 535. The end of the screw is prevented from being exposed outside the lever 53, and from easily scratching with other components or interfering with the arrangement of other components. The screw is not visible from the outside by the above design, improving the overall aesthetics.

When the centrifugal drainage valve mechanism is assembled, the connecting part 531 of the lever 53 can be placed at an upper part of the bracket 421, the threaded connection groove 4211 in the bracket 421 is ensured to correspond to the avoidance hole 535 in the lever 53. The rotating shaft 6 passes through the rotating shaft hole 534 in the lever 53, and the screw passes through the threaded through hole in the rotating shaft 6 to be fixedly connected to the threaded connection groove 4211 in the bracket 421, so that the rotating shaft 6 is fastened to the bracket 421, and the assembling connection is simple and efficient, and has high reliability.

Further, as shown in FIGS. 7 and 8, the connecting part 531 is a thickened connecting part 531 having an enlarged outer diameter in the middle of the lever 53. The lever 53 further includes a resistance arm 533 and a power arm 532 which are connected to both sides of the thickened connecting part 531, wherein the power arm 532 is connected to the centrifugal component 51, and the resistance arm 533 is connected to the valve plug component 52.

By enlarging the outer diameter of the connecting part 531 to thicken the connecting part 531, the rotating shaft hole 534 and the avoidance hole 535 are formed, meanwhile, the strength of the lever 53 itself is effectively ensured, so that the lever 53 is not easily deformed during use, and the durability is increased. The problems are effectively solved that low strength and indurability of the lever 53 are caused by the rotating shaft hole 534 and the avoidance hole 535.

Further, the thickened connection part 531 is of a cylindrical structure with an enlarged outer diameter and a first extension length L1, and an extension direction of the thickened connection part 531 is perpendicular to a swinging direction of the lever 53.

The power arm 532 and the resistance arm 533 are of plate-shaped structures connected on both sides of the thickened connecting part 531 and respectively having a first width H1. The power arm 532 is connected to a lower part of the side, close to the centrifugal component 51, of the thickened connecting part 531; and the power arm 532 is slightly inclined upwards from the thickened connecting part 531 toward the centrifugal component 51, and is fixedly connected to the centrifugal component 51.

As shown in FIGS. 7 and 8, the resistance arm 533 is connected to an upper part of the side, close to the valve plug component 52, of the thickened connecting part 531. The resistance arm 533 is slightly inclined downwards from the thickened connecting part 531 toward the valve plug component 52 and is hinged with the valve plug component 52. The entire lever 53 forms a combination structure like "6" and "9" or two whistle portions superimposed. By the above structure of the lever 53, the centrifugal component 51 can more easily drive the valve plug component 52 to move.

Preferably, the first width H1 is equal to the first extension length L1, a thickness of the power arm 532 is gradually decreased from the thickened connecting part 531 toward the centrifugal component 51, and a thickness of the resistance arm 533 is gradually decreased from the thickened connecting part 531 toward the valve plug component 52. An end, connected to the thickened connecting part 531, of the power arm 532 or the resistance arm 533 is relatively thicker, so that the structural strength of the power arm 532 or the resistance arm 533 is ensured, and the weight of the entire centrifugal drainage mechanism 5 is reduced while the material cost is saved by the thickness of the power arm 532 or the resistance arm 533 being gradually decreased.

Further, the valve plug component 52 includes a valve plug 521 and a valve rod 522, and a guide sleeve is arranged on the mounting cover plate 42 for allowing the valve rod 522 to move in a radial direction of the inner cylinder 1. An upper end of the valve rod 522 is rotatably connected to the resistance arm 533 through a valve plug rotating shaft 524, and a lower end of the valve rod 522 is connected to the valve plug 521. Specifically, a hollow channel is formed inside the guide sleeve for guiding, the valve rod 522 can move up and down along the guide sleeve, and the lower end of the valve rod 522 extends out of the hollow channel to be connected to the valve plug 521.

As shown in FIG. 8, the end, matched with the valve plug component 52, of the resistance arm 533 is provided with an open slot 5331 for receiving the valve rod 522. The open slot 5331 includes a first side wall and a second side wall which are opposite to each other, and each of the first side wall and the second side wall is provided with a hole for matching with the valve plug rotating shaft 524. When the resistance arm 533 of the lever 53 moves upwards, the valve rod 522 is driven to move upwards, thereby driving the valve plug 521 to move upwards to open the water drainage hole in the inner cylinder 1 of a washing machine.

As shown in FIG. 1, FIG. 2, FIG. 7, and FIG. 8, this embodiment provides a washing machine with the above laundry lifting device 4, including: an inner cylinder 1; and an inner cylinder door 2 being capable of being opened and closed and mounted on an opening of the inner cylinder 1. The inner cylinder door 2 and the inner cylinder 1 form a separate washing chamber for separately holding washing water in washing laundry, when the inner cylinder door 2 is closed. A water drainage hole is formed in a side wall of the inner cylinder 1, the laundry lifting device 4 is installed on an inner wall of the inner cylinder 1 at the water drainage hole, and the centrifugal drainage mechanism 5 can close/open the water drainage hole.

### Embodiment 6

As shown in FIGS. 1, 2 and 7 to 10, this embodiment provides a laundry lifting device 4 for a washing machine on the basis of Embodiment 5. The main problems in Embodiment 5 to be solved are as follows: the centrifugal component 51 of the centrifugal drainage mechanism is easily deflected in position due to high speed rotation and vibration of a washing machine, and normal water drainage is affected, and the centrifugal component 51 is deflected for a long period of time to cause deformation of a lifting rib shell 41 made of a plastic material, resulting in poor appearance fit.

The laundry lifting device 4 in this embodiment further includes a centrifugal drainage mechanism 5 which is attached in the chamber of a lifting rib shell 41, and the centrifugal drainage mechanism 5 can open the water drainage hole for draining water under the action of centrifugal force. In this embodiment, the centrifugal drainage mechanism 5 is fixedly mounted on the mounting cover plate 42.

The centrifugal drainage mechanism 5 includes a centrifugal component 51 and a valve plug component 52. The centrifugal component 51 generates centrifugal motion on a first moving surface under the action of centrifugal force, to drive the valve plug component 52 to open a water drainage hole formed in a body of an inner cylinder 1 of a washing machine for draining water.

As shown in FIGS. 8 to 10, the laundry lifting device 4 in this embodiment further includes a limiting structure 54 fixedly attached on a mounting cover plate 42, the limiting structure 54 is used for limiting the centrifugal component 51 from generating offset motion deviating from the first moving surface.

In this embodiment, through the limiting structure 54 attached on the mounting cover plate 42, the centrifugal component 51 is limited from generating offset motion deviating from the first moving surface, which can effectively prevent the centrifugal component 51 from being deflected during the high-speed rotation of the washing machine, thereby affecting the normal water drainage of the centrifugal drainage mechanism 5.

Further, the centrifugal component 51 includes a balancing weight that moves along a first moving surface under the action of centrifugal force. Due to high speed rotation and vibration of a washing machine, the position of the balancing weight in the laundry lifting device 4 is very likely to be deflected to affect normal water drainage, and the balancing weight is deflected for a long period of time to cause deformation of a lifting rib made of a plastic material, resulting in poor appearance fit.

In this embodiment, the limiting structure 54 includes limiting baffles attached on left and right sides of the balancing weight, and the position of the balancing weight is limited by the limiting baffles disposed on the left and right sides of the balancing weight, thereby effectively preventing the balancing weight from being deflected to the left and right sides under the action of an external force.

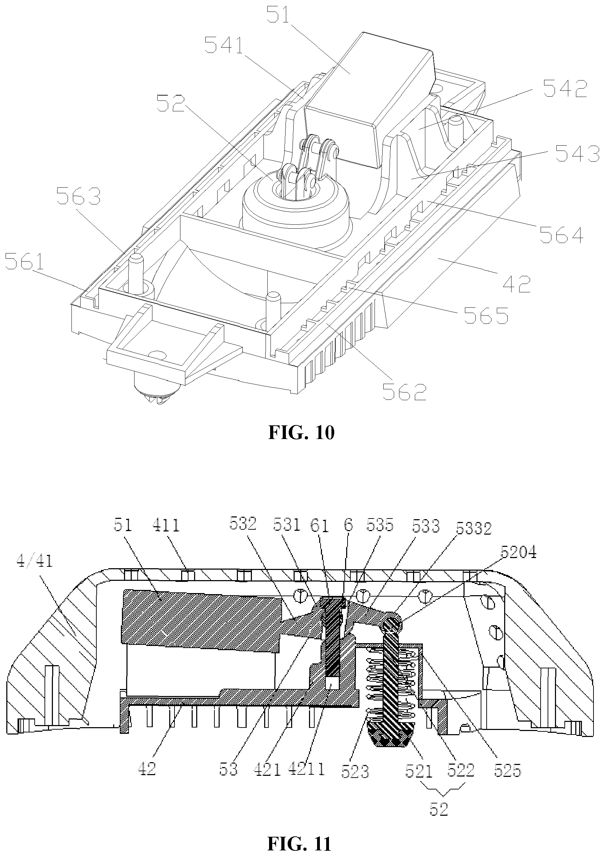

Further, as shown in FIGS. 9 and 10, the limiting baffles include a first limiting plate 541 and a second limiting plate 542 which are fixedly attached at intervals on the mounting cover plate 42, and a limit space for allowing the balancing weight to be mounted in a limited mode is formed between the first limiting plate 541 and the second limiting plate 542.

Further, the balancing weight includes a first side wall and a second side wall which are oppositely disposed on left and right sides thereof. The first limiting plate 541 is located outside the first side wall and is parallel to the first side wall of the balancing weight. The second limiting plate 542 is located outside the second side wall and is parallel to the second side wall of the balancing weight. There is a certain gap distance between the first limiting plate 541 and the first side wall, and there is a certain gap distance between the second limiting plate 542 and the second side wall, to avoid interference with normal centrifugal movement of the balancing weight in the first moving surface.

Preferably, the first moving surface is parallel to a radial direction of a cylinder body of a washing machine, and the limiting baffles are extended in a direction parallel to the first moving surface and prevent the balancing weight from the left and right deviation relative to the first moving surface. The first limiting plate 541 and the second limiting plate 542 prevent the balancing weight from moving on an offset plane perpendicular to the first moving surface.

Preferably, the first limiting plate 541 and the second limiting plate 542 are integrated with the mounting cover plate 42 by injection molding. In the embodiment of the present invention, the first limiting plate 541, the second limiting plate 542 and the mounting cover plate 42 are manufactured by integral injection molding, and the molding process is simple, and the manufacturing cost is low.

In this embodiment, the first limiting plate 541 and the second limiting plate 542 are integrally formed on the mounting cover plate 42, which is easier to form and easier to process compared with being disposed inside the lifting rib shell 41.

Further, the laundry lifting device 4 in this embodiment further includes a reinforcing structure for increasing the strength of the limiting baffles.

Preferably, as shown in FIGS. 9 and 10, reinforcing ribs 543 as the reinforcing structure are connected between the limiting baffles and the mounting cover plate 42. A plurality of the reinforcing ribs 543 are provided and are spaced apart along the length direction of the limiting baffles. Each of the reinforcing ribs 543 includes a first connecting edge and a second connecting edge which are connected and vertical to each other. The first connecting edges are fixedly connected to the limiting baffles, and the second connecting edges are fixedly connected to the mounting cover plate 42.

More preferably, the reinforcing ribs 543 are integrated with the mounting cover plate 42, the first limiting plate 541, and the second limiting plate 542 by injection molding.

In this embodiment, the first limiting plate 541 and the second limiting plate 542 are attached on the left and right sides of the balancing weight, so that left and right shaking of the balancing weight can be effectively limited, thereby preventing the centrifugal component from being damaged due to resonance and the like. It is avoided that the centrifugal component 51 is deflected for a long period of time to cause deformation of the lifting rib shell 41 made of a plastic material, resulting in poor appearance fit.

Further, the laundry lifting device 4 further includes a positioning structure that limits the deviation of the position of the mounting cover plate 42.

In this embodiment, by arrangement of the positioning structure for limiting the deviation of the mounting cover plate 42 in the laundry lifting device 4, dual functions are taken, that is, it is avoided that the position of the mounting cover plate is deviated within the lifting rib shell 41, and the stability of the positions of the first limiting plate 541 and the second limiting plate 542 is ensured, further avoiding the phenomenon of deviation of the position of the balancing weight.

Further, as shown in FIG. 9, the positioning structure includes a first clamping wall 561 and a second clamping wall 562 which are fixedly attached on both sides of the mounting cover plate 42, and the first clamping wall 561 and the second clamping wall 562 are extended along the length direction of the mounting cover plate 42.

As shown in FIGS. 9 and 10, along the length direction of the mounting cover plate 42, the mounting cover plate 42 includes a first elongated edge and a second elongated edge which are opposite to each other, the first clamping wall 561 is attached at a position close to the first elongated edge at an upper side of the mounting cover plate 42, and the second clamping wall 562 is attached at a position close to the second elongated edge at the upper side of the mounting cover plate 42.

The first clamping wall 561 and the second clamping wall 562 may be walls with elongated shape that extend along the length direction of the mounting cover plate 42 or may be the walls that are spaced apart on the mounting cover plate 42.

Further, the positioning structure further includes a first retaining wall 551 and a second retaining wall 552 which are fixedly attached on both sides of the lifting rib shell 41, the first clamping wall 561 is limited and clamped in the first retaining wall 551, and the second clamping wall 562 is limited and clamped in the second retaining wall 552.

Preferably, the first clamping wall 561 and the second clamping wall 562 are attached at positions close to edges on both sides of the mounting cover plate 42, and the first retaining wall 551 and the second retaining wall 552 are formed by side walls on both sides of the lifting rib shell 41.

Specifically, as shown in FIG. 9, the lifting rib shell 41 includes a strip-shaped top wall and side walls connected to both sides of the strip-shaped top wall, and the first retaining wall 551 and the second retaining wall 552 are formed by lower edges of the side walls on both sides of the lifting rib shell 41 vertically extending downward. The first clamping wall 561 and the second clamping wall 562 are respectively limited on the inner sides of the side walls of the lifting rib shell 41.

The first clamping wall 561 abuts on the first retaining wall 551 for limitation, as well as the second clamping wall 562 abuts on the second retaining wall 552 for limitation, so that the coordination between the mounting cover plate 42 and the lifting rib shell 41 is more stable, and the stability of the positions of the first limiting plate 541 and the second limiting plate 542 can be enhanced.

Further, in another more preferred embodiment, the positioning structure further includes a third clamping wall 563 attached on the mounting cover plate 42 and spaced apart from the first clamping wall 561, and a fourth clamping wall 564 attached on the mounting cover plate 42 and spaced apart from the second clamping wall 562. The third clamping wall 563 is located between the first clamping wall 561 and the first limiting plate 541, and the fourth clamping wall 564 is located between the second clamping wall 562 and the second limiting plate 542.

The positioning structure further includes a third retaining wall 553 and a fourth retaining wall 554 which are correspondingly fixedly attached on an inner wall of the lifting rib shell 41. The third clamping wall 563 abuts on the third retaining wall 553 for limitation, and the fourth clamping wall 564 abuts on the fourth retaining wall 554 for limitation.

Further, at least part of the third clamping wall 563 abuts on an outer side or an inner side of the third retaining wall 553 for limitation, and at least part of the fourth clamping wall 564 abuts on an outer side or an inner side of the fourth retaining wall 554 for limitation.

Preferably, an upper end of the third clamping wall 563 abuts on the inner side of the third retaining wall 553 for limitation, and an upper end of the fourth clamping wall 564 abuts on the inner side of the fourth retaining wall 554 for limitation.

As shown in FIG. 9, by means of the limitation between the third clamping wall 563 and the third retaining wall 553, as well as the imitation between the fourth clamping wall 564 and the fourth retaining wall 554, the mounting cover plate 42 is more firmly clamped within the lifting rib shell 41, so that the mounting cover plate 42 does not displace in position in a horizontal direction. It is further ensured that the positions of the first limiting plate 541 and the second limiting plate 542 are stable, and further the movement of the balancing weight is prevented from deviating.

In the above solution, the reinforcing ribs 543 are integrally connected with the third clamping wall 563 and the fourth clamping wall 564.

In particular, each reinforcing rib 543 has a plate-like pentagonal structure. Each reinforcing rib 543 includes a bottom reinforcing edge, and a first side reinforcing edge and a second side reinforcing edge which are perpendicularly connected to the bottom reinforcing edge, wherein the first side reinforcing edge is fixedly connected to the first limiting plate 541 or the second limiting plate 542, and the second side reinforcing edges are fixedly connected to the second limiting plate 542.

As shown in FIG. 10, in this embodiment, a plurality of connecting ribs 565 are connected between the first clamping wall 561 and the third clamping wall 563 as well as between the second clamping wall 562 and the fourth clamping wall 564, the connecting ribs 565 are spaced along the length direction of the mounting cover plate 42 between the first clamping wall 561 and the third clamping wall 563 as well as between the second clamping wall 562 and the fourth clamping wall 564. The stability of structures between the first clamping wall 561 and the third clamping wall 563 as well as between the second clamping wall 562 and the fourth clamping wall 564 is further enhanced by the connecting ribs, and the phenomenon of shaking and deformation is avoided when the clamping walls of the mounting cover plate are matched with the retaining walls of the lifting rib shell 41.

Further, the connecting ribs 565 are connecting plates with L-shape respectively connected between the first clamping wall 561 and the third clamping wall 563 as well as between the second clamping wall 562 and the fourth clamping wall 564. By the arrangement of the connecting ribs 565 with L-shape, the robustness of its connection can be ensured, and the material cost can be reduced.

In another embodiment, a plurality of water discharge holes are spaced apart on the mounting cover plate 42 between the first clamping wall 561 and the third clamping wall 563 as well as between the second clamping wall 562 and the fourth clamping wall 564, so that a large amount of residual water is prevented from being accumulated in a groove formed by the first clamping wall 561, the third clamping wall 563, and the mounting cover plate 42 between both clamping walls, or a groove formed by the second clamping wall 562, the fourth clamping wall 564, and the mounting cover plate 42 between both clamping walls. Thereby it is avoided that the water cannot be discharged to generate bacteria and affect the cleaning effect inside a washing machine.

Preferably, at least one water discharge hole is formed on the mounting cover plate 42 between each two connecting ribs 565, to ensure that washing water accumulated in a space between each two connecting ribs 565 can be discharged. Thus there is no possibility to accumulate washing water at any corner position in the mounting cover plate 42.

### Embodiment 7

As shown in FIG. 1, FIG. 2, and FIG. 9 to FIG. 13, this embodiment discloses a centrifugal drainage mechanism 5 for a washing machine, including: a centrifugal component 51; a valve plug component 52 normally sealing a water drainage hole of a washing machine; and a lever 5. One end of the lever 53 is fixedly connected to the centrifugal component 51, and the other end of the lever 53 is in limited connection with the valve plug component 52 by a ball joint connection structure.

According to the centrifugal drainage mechanism 5 of the present application, the lever 53 and the valve plug component 52 are in limited connection through the ball joint connection structure. The following problems of the existing centrifugal drainage mechanism 5 are effectively solved. A lever 53 is hinged with a valve plug component 52 in the existing centrifugal drainage mechanism 5 through a shaft and a shaft hole, so the valve plug component 52 is subjected to a biasing force of lever tension, and cannot align well with a water drainage hole, thereby the valve plug 521 fails working to affect the sealing effect.

Further, the valve plug component 52 normally seals the water drainage hole. The valve plug component 52 is connected with the centrifugal component 51 by the lever 53, and the centrifugal component 51 moves in the radial direction of an inner cylinder toward a circumferential wall of the inner cylinder 1 under the action of centrifugal force. A middle of the lever 53 is provided with a lever fulcrum which is rotatably matched with a rotating shaft 6, to convert the centrifugal motion of the centrifugal component 51 to the movement of the valve plug component 52 in the radial direction of the inner cylinder 1 toward the center of the inner cylinder 1 to open the water drainage hole for draining water.

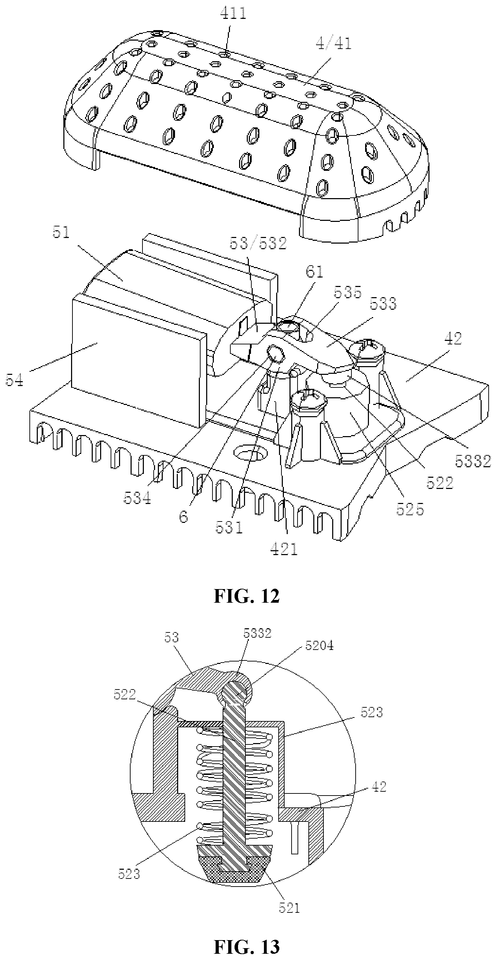

More specifically, as shown in FIGS. 11 and 12, the centrifugal component 51 includes a balancing weight having a certain weight. The lever 53 includes a power arm 532 and a resistance arm 533 which are located on both sides of the lever fulcrum, the power arm 532 is fixedly connected with the centrifugal component 51, and an end of the resistance arm 533 is in fit with the valve plug component 52 through the ball joint connection structure. The centrifugal component 51 moves in the radial direction of the inner cylinder 1 toward the peripheral wall of the inner cylinder 1 under the action of centrifugal force, the centrifugal component 51 presses the end of the resistance arm 533 of the lever 53 to move toward the center of the inner cylinder 1, and the valve plug component 52 moves toward the center of the inner cylinder 1 with a resistance end of the lever 53 under the limiting action of the ball joint connection structure. So the water drainage hole in the inner cylinder 1 is open for draining water.

According to the centrifugal drainage mechanism 5 in this embodiment, the lever 53 and the valve plug component 52 are in limited connection through the ball joint connection structure. The following problems of the existing centrifugal drainage mechanism 5 are effectively solved. A lever 53 is hinged with a valve plug component 52 of the existing centrifugal drainage mechanism through a shaft and a shaft hole, so the valve plug component 52 is affected by a biasing force of lever tension, and the position of the valve plug 521 cannot align well with a water drainage hole, thereby the valve plug 521 fails working to affect the sealing effect of the inner cylinder 1. According to the centrifugal drainage mechanism 5 in the present application, the lever 53 is in limited connection to the valve plug component 52 by the ball joint connection structure, and the valve plug component 52 is not affected by the biasing force of the tension of the lever 53. The position of the valve plug component 52 can always be kept to align with the water drainage hole in a normal state, so that deviation does not occur, thereby improving the reliability and sealing effect of the centrifugal drainage mechanism 5.

Further, as shown in FIGS. 11 to 13, the ball joint connection structure includes a ball joint housing 5332 and a ball joint 5204 limited within the ball joint housing 5332, the ball joint housing 5332 is fixedly attached on an end of the lever 53, and the ball joint housing 5332 is provided with a cavity inside. The ball joint 5204 is fixedly attached on the valve plug component 52, and the ball joint 5204 is limited within the cavity of the ball joint housing 5332 to achieve a limited connection between the lever 53 and the valve plug component 52.

In the above solution, when the ball joint housing 5332 at the end of the lever 53 moves toward the center of the inner cylinder 1, the ball joint 5204 is pulled to move upward accordingly, thereby driving the valve plug component 52 to move upward to open the water drainage hole in the inner cylinder 1. Since the ball joint 5204 is limited within the ball joint housing 5332, there is no substantial connection between the ball joint 5204 and the ball joint housing 5332. The following problems of the existing centrifugal drainage mechanism 5 are effectively solved. A lever 53 are hinged with a valve plug component 52 for the existing centrifugal drainage mechanism 5, and the valve plug component 52 is affected by the biasing pulling force of the lever 53, and does not align with the water drainage hole, thereby affecting the sealing effect of the inner cylinder 1.

Alternatively, in another variant solution, the ball joint housing 5332 is fixedly attached on the valve plug component 52, and the ball joint 5204 is correspondingly attached on the lever 53. The ball joint 5204 on the lever 53 is limited within the ball joint housing 5332 of the valve plug component 52 to achieve a limited connection between the lever 53 and the valve plug component 52.

Further, as shown in FIGS. 11 and 13, the valve plug component 52 includes a valve plug 521 normally sealing a water drainage hole of a washing machine, and a valve rod 522, wherein a lower end of the valve rod 522 is connected to the valve plug 521, and an upper end of the valve rod 522 is in limited connection to the lever 53.

The ball joint 5204 is fixedly attached at the upper end of the valve rod 522, and the ball joint housing 5332 is attached on the end of the lever 53. Or, the ball joint housing 5332 is fixedly attached at the upper end of the valve rod 522, and the ball joint 5204 is attached on the end of the lever 53.

In particular, as shown in FIGS. 11 and 13, the ball joint 5204 is of a spherical structure, and a diameter of the ball joint 5204 is greater than an outer diameter of the valve rod 522. The ball joint 5204 may also be a spherical structure with a diameter being smaller than the outer diameter of the valve rod 522. The ball joint housing 5332 is of a hollow hemispherical structure, and the ball joint housing 5332 is provided with a hemispherical cavity matched with an outer wall of the ball joint 5204.

Preferably, the ball joint housing 5332 is fixedly attached on the lever 53, and the ball joint 5204 is fixedly attached on the valve plug component 52. The side, close to the valve plug component 52, of the ball joint housing 5332 is provided with an opening having an inner diameter smaller than the diameter of the ball joint 5204. More preferably, the inner diameter of the ball joint housing opening is smaller than the outer diameter of the valve rod 522. An annular groove recessed toward the center of the valve rod 522 is formed at a position of the ball joint 5204 where the ball joint is connected with the end of the valve rod 522, and an edge of the opening of the ball joint housing 5332 is limited in the annular groove to prevent the ball joint housing 5332 from sliding up and down along the valve rod 522.

Further, as shown in FIGS. 11 and 13, a bottom of the ball joint housing 5332 is provided with a downwardly opening having an inner diameter smaller than the diameter of the ball joint 5204, to ensure that the ball joint 5204 cannot be detached from the ball joint housing 5332 through the opening and ensure the reliability of the connection between the ball joint 5204 and the ball joint housing 5332. The ball joint 5204 includes an upper hemisphere and a lower hemisphere connected to the valve rod 522, and the ball joint 5204 at the upper end of the valve rod 522 may be fully limited within the ball joint housing 5332. Or at least the upper hemisphere is limited within the ball joint housing 5332, and an edge of the ball joint housing opening is clamped to a circumferential wall of the lower hemisphere of the ball joint 5204.

Further, the upper end of the valve rod 522 is configured into the ball joint 5204 like a spherical shape, and the ball joint 5204 and the valve rod 522 are integrally formed. The upper end of the valve rod 522 is integrally provided with a ball joint 5204 having a spherical shape, and the ball joint 5204 and the valve rod 522 are integrally formed, which is simple to be formed and easy to be manufactured.

Preferably, as shown in FIGS. 11 and 13, the ball joint 5204 and the valve rod 522 are coaxially arranged, to ensure the synchronized the movement of the ball joint 5204 and the valve rod 522 and to balance the operation of the entire valve plug component 52.

Further, the end, matched with the valve plug component 52, of the lever 53 is configured into a hollow structure with a cavity inside to form the ball joint housing 5332. Preferably, as shown in FIG. 11, the ball joint 5204 and the valve rod 522 are coaxially arranged, ensuring the synchronized movement of the ball joint 5204 and the valve rod 522 and to balance the operation of the entire valve plug component 52.

Further, the end, matched with the valve plug component 52, of the lever 53 is configured into a hollow structure with a cavity inside to form the ball joint housing 5332, and the ball joint housing 5332 and the lever 53 are integrally formed.

In this embodiment, by directly configuring the upper end of the valve rod 522 into the ball joint 5204, and directly configuring the end, matched with the valve plug component 52, of the lever 53 into the hollow structure with the cavity inside to form the ball joint housing 5332, the valve rod 522 is connected with the lever 53 by utilizing the special shapes of their own structures. The structure is simple, firm and reliable, without being fixedly connected by other connecting parts, thus simplifying the structure of the centrifugal drainage mechanism 5.

Preferably, there is a movable gap between the ball joint housing 5332 and the ball joint 5204, so there is a certain displacement between the lever 53 and the valve plug component 52 for allowing a fault. Even slight lateral displacement of the lever 53 in its axial direction does not exert a biasing pulling force on the valve plug component 52, and does not deflect the valve plug 521, so that the valve plug 521 can still remain in a position corresponding to the water drainage hole.

More preferably, in one solution, the ball joint 5204 has an ellipsoidal shape, a coordinate system is established with a center of the ball joint 5204 of the ellipsoidal shape, a direction parallel to the axial direction of the valve rod 522 is defined as a Y axis, a direction perpendicular to the axial direction of the valve rod 522 is defined as an X axis, and a diameter d1 of the ball joint 5204 in the Y-axis direction is greater than a diameter d2 in the X-axis direction. The cavity in the ball joint housing 5332 has a spherical shape, and a diameter of the cavity is set to be D. The diameter D of the cavity coincides with the diameter d1 of the ball joint 5204 in the Y-axis direction, with a gap between the two being less than a set distance L1, wherein L1 is less than 1 mm. The diameter d2 of the ball joint 5204 in the X-axis direction is much smaller than the diameter D of the cavity, with a gap between the two being greater than a set distance L2, wherein L2 is greater than 3 mm.

Through the above design, the ball joint housing 5332 is compactly matched with the ball joint 5204 in the axial direction of the valve rod 522, and the ball joint 5204 can move up and down with the valve plug component 52 closely following the ball joint housing 5332. There is a certain movable clearance space between the ball joint 5204 and the ball joint housing 5332 in the X-axis direction perpendicular to the axial direction of the valve rod 522, which can ensure that when the lever 53 is slightly displaced in this direction, a biasing pulling force is not taken on the valve plug component 52, and the position of the valve plug 521 will not be affected. Thus the position of the valve plug 521 corresponds to the water drainage hole, thereby improving the sealing performance.

Or, in another solution, the cavity in the ball joint housing 5332 may be configured as an ellipsoidal shape, and the ball joint 5204 may be configured as a spherical shape, so that the above technical effects may also be achieved. The design principle is the same as that in the above solution, which is not repeated here.

Further, in another embodiment, a peripheral wall of the ball joint 5204 is provided with a limiting protrusion, and the ball joint housing 5332 is correspondingly provided with a limiting groove matched with the limiting protrusion. The limiting protrusion may be one or more spaced apart along the circumferential direction of the ball joint 5204. The coordination of the limiting protrusion and the limiting groove can ensure the stability of the coordination of the ball joint 5204 with the ball joint housing 5332, avoiding relative rotation between the ball joint 5204 and the ball joint housing 5332 in the circumferential direction.

In another embodiment, the ball joint 5204 is hinged with the upper end of the valve rod 522 by means of a hinge mechanism, and the ball joint 5204 is movably connected to the valve rod 522 in a hinged manner, so that the ball joint 5204 has a high flexibility with respect to the valve rod 522, and the valve plug component 52 can move more flexibly and smoothly with the lever 53.

According to the centrifugal drainage mechanism 5 in this embodiment, the lever 53 is in limited connection with the valve plug component 52 by the ball joint connection structure, and the valve plug component 52 is not affected by the biasing force of the tension of the lever 53. The position of the valve plug component 52 can always be kept to align with the water drainage hole in a normal state, so that deviation does not occur, thereby improving the reliability and sealing performance of the centrifugal drainage mechanism 5.

As shown in FIG. 2, FIG. 11 and FIG. 12, this embodiment also provides a laundry lifting device 4, including a lifting rib shell 41 with a chamber inside, and the centrifugal drainage mechanism 5 is arranged in the lifting rib shell 41.

Further, the lifting rib shell 41 is of a shell with an opening. The laundry lifting device 4 further includes a mounting cover plate 42 blocking the opening of the lifting rib shell 41, and the centrifugal drainage mechanism 5 is fixedly mounted on the mounting cover plate 42. Preferably, as shown in FIGS. 11 and 13, a valve plug mounting seat 525 is fixedly attached on the mounting cover plate 42, and the valve plug mounting seat 525 is of a sleeve of which a lower end is open and an upper end is closed. The closed end of the valve plug mounting seat 525 is provided with a through hole for allowing the valve rod 522 to move up and down, and a compression spring 523 is arranged between the valve plug mounting seat 525 and the valve plug 521. The valve plug 521 tightly abuts against and blocks the water drainage hole of the inner cylinder 1 under the action of the compression spring 523. The centrifugal component 51 drives the end, matched with the valve plug component 52, of the lever 53 to move upward under the action of centrifugal force during high-speed dewatering, and the valve plug 521 moves upward under the limiting action of the ball joint connection structure to open the water drainage hole for water drainage.

This embodiment also provides a washing machine with the centrifugal drainage mechanism 5 or the laundry lifting device 4.

As shown in FIG. 1, FIG. 2, FIG. 11, and FIG. 12, the washing machine includes: an inner cylinder 1, and an inner cylinder door 2 mounted in an opening of the inner cylinder 1 and being capable of opening and closing the opening. The inner cylinder door 2 and the inner cylinder 1 form a separate washing chamber for independently holding washing water during washing laundry, when the inner cylinder door 2 is closed. A water drainage hole is formed in a side wall of the inner cylinder 1, the laundry lifting device 4 is installed on an inner wall of the inner cylinder 1 at the water drainage hole, and the centrifugal drainage mechanism 5 can close and open the water drainage hole.

### Embodiment 8

As shown in FIG. 1, FIG. 2, FIG. 11, and FIG. 12, this embodiment provides a laundry lifting device 4 for a washing machine. The rotating shaft 6 is fixedly attached on a mounting cover plate 42 through a fixed support 61, so while the rotating shaft 6 is efficiently and fixedly attached on the mounting cover plate 42, and the problems of poor reliability and low stability of the existing centrifugal drainage mechanism 5 are effectively solved.

Specifically, the present application describes a laundry lifting device 4 for a washing machine, including: a lifting rib shell 41 provided with an cavity inside with an opening; a mounting cover plate 42 mounted at the opening of the lifting rib shell 41; and a centrifugal drainage mechanism 5. The centrifugal drainage mechanism includes a centrifugal component 51, a valve plug component 52, and a lever 53 connected between the centrifugal component 51 and the valve plug component 52, which are disposed within the lifting rib shell. A middle part of the lever 53 is provided with a rotating fulcrum, the rotating fulcrum is rotatably connected to a rotating shaft 6, and the rotating shaft 6 is supported by and fixed to the mounting cover plate 42 by a fixed support 61.

According to the laundry lifting device 4 for a washing machine of this embodiment, the rotating shaft 6 is fastened to the mounting cover plate 42 through the fixed support 61. The rotating shaft 6 is efficiently and reliably assembled on the mounting cover plate 42. The laundry lifting device has advantages of high reliability and high stability, and effectively solves the problems of poor reliability and low stability of the existing centrifugal drainage mechanism 5.

As shown in FIG. 2, FIG. 11, and FIG. 12, the laundry lifting device 4 in this embodiment is composed of two parts, one is the lifting rib shell 41 and the other is the mounting cover plate 42, which can be connected by screws or bolts and fixing holes to become an integration. The mounting cover plate 42 or the lifting rib shell 41 is provided with a fixing column or a fixing hole, the laundry lifting device 4 is connected to the inner cylinder 1 by screws/bolts, and the valve plug component 52 of the centrifugal drainage mechanism 5 disposed in the lifting rib shell 41 corresponds to the water drainage hole of the inner cylinder 1.

As shown in FIG. 1, FIG. 2 and FIG. 12, the lifting rib shell 41 is provided with spray holes 411, so that water can be sprayed on laundry through the spray holes after being lifted to a high place. The lifting rib shell 41 or the mounting cover plate 42 is provided with a water inlet for communicating an interior of the lifting rib shell 41 with an interior of the inner cylinder 1.

Further, as shown in FIGS. 11 and 12, the rotating shaft 6 is provided with a fixing portion matched with the fixed support 61, and the fixed support 61 is fixedly connected with the fixing portion to support and fix the rotating shaft 6 to the mounting cover plate 42. The fixing portion may be a partial structure of the fixed support 61, such as a connecting hole formed in the rotating shaft 6 or a clamping platform or a clamping slot integrally formed in the rotating shaft 6. The fixed support 61 may be fixedly connected to the connecting hole or the clamping platform or the clamping slot to support and fix the rotating shaft 6 to the mounting cover plate 42.

Further, as shown in FIGS. 11 and 12, in this embodiment, the fixed support 61 is a screw having an extended length, and the fixing portion is a threaded through hole formed in the rotating shaft 6, and the screw passes through the threaded through hole to support and fix the rotating shaft 6 at a set height position above the mounting cover plate 42. By adopting the screw as the fixed support 61 for fixedly connecting the rotating shaft 6 and the mounting cover plate 42, it is quickly and efficiently to assemble, and easily disassemble. Not only the connection is firm and reliable, and not easy to be loosened, but also the structure is simple, the cost is low, and the use and popularization are easy.

In the above solution, the entire rotating shaft 6 may be provided as a cylindrical structure having a relatively great diameter to easily form the threaded through hole, so that the threaded through hole can be directly formed in the rotating shaft 6. Or, an extended connecting part extending outward may also be formed on an outer wall of the rotating shaft 6, and the threaded through hole is formed in the extended connecting part.

Further, in this embodiment, both ends of the rotating shaft 6 are respectively in fit with the lever 53 in rotating manner, the threaded through hole is formed in a middle of the rotating shaft 6, and the screw is fixedly connected at the middle of the rotating shaft 6 for support. Preferably, the middle of the rotating shaft 6 is thickened, and the threaded through hole is formed in the thickened middle of the rotating shaft 6. By the above arrangement, the strength of the rotating shaft 6 can be effectively ensured, and the problems are effectively solved that the strength of the rotating shaft 6 is reduced, and the rotating shaft 6 is easily deformed during use due to the formation of the threaded through hole.

Further, as shown in FIGS. 11 and 12, a bracket 421 is fixed on the mounting cover plate 42, the bracket 421 is provided with a threaded connection groove 4211 having an extended length and matched with the screw, and the screw is fixedly connected in the threaded connection groove 4211. The bracket 421 is of a pillar structure fixedly attached on the mounting cover plate 42, a cylindrical groove is formed at a position corresponding to the screw in the pillar structure, and an inner wall of the cylindrical groove is provided with threads to form the threaded connection groove 4211. An inner diameter of the threaded connection groove 4211 is matched with an outer diameter of the screw. The screw passes through the threaded through hole in the rotating shaft 6, and an end of the screw extends into and is threadedly and fixedly connected in the threaded connection groove 4211.

In the above solution, the screw is fixedly connected to the rotating shaft 6 and the mounting cover plate 42 by threaded connection, so that the structure is simple, the connection is quick and efficient, and the entire laundry lifting device 4 has higher reliability and higher stability.

Preferably, the bracket 421 is used for supporting and fixing the rotating shaft 6, and located at a middle of the lever 53 for supporting the lever 53. In this embodiment, an upper end face of the bracket 421 is provided with an arc-shaped support surface matched with the lever 53. Through the above design, the bracket 421 provides a more stable and gentle supporting force for the lever 53, and the bracket 421 is located under the lever 53 for support and shares part of the weights of the centrifugal component 51 and the lever 53, so that it is effectively avoided that the rotating shaft 6 bears too much pressure and is prone to fracture or deformation when only the rotating shaft 6 provides full support for the lever 53.

Preferably, the bracket 421 and the mounting cover plate 42 are integrated as a whole, and the bracket 421 is of a pillar structure with a certain extension length which is integrally formed on the mounting cover plate 42 by injection molding. The pillar structure has an extended width matched with a width of the lever 53, and supports on a fulcrum position in the middle of the lever 53.

Further, as shown in FIGS. 11 and FIG. 12, the lever 53 includes a connecting part 531 located at a middle fulcrum, the connecting part 531 is provided with a rotating shaft hole 534 matched with the rotating shaft 6 in a first direction, and the connecting part 531 is provided with an avoidance hole 535 for providing as space for the fixed support 61 in a second direction.

Preferably, the first direction is a horizontal direction, the second direction is a vertical direction, and the avoidance hole 535 is a through hole having an elongated cross section which runs through from top to bottom in the connecting part 531 to provide a sufficient space for the screw.

In the above solution, as shown in FIGS. 11 and 12, the avoidance hole 535 effectively provides a space for the screw, so a nut at an end of the screw is hidden in the avoidance hole 535. The end of the screw is prevented from being exposed outside the lever 53, and from easily scratching with other components or interfering with the arrangement of other components. The screw is not visible from the outside by the above design, improving the overall aesthetics.

When the centrifugal drainage valve mechanism is assembled, the connecting part 531 of the lever 53 can be placed at an upper part of the bracket 421, and the threaded connection groove 4211 in the bracket 421 is ensured to correspond to the avoidance hole 535 in the lever 53. The rotating shaft 6 passes through the rotating shaft hole 534 in the lever 53, and the screw passes through the threaded through hole in the rotating shaft 6 to be fixedly connected to the threaded connection groove 4211 in the bracket 421, so that the rotating shaft 6 is fastened to the bracket 421, and the assembling connection is simple and efficient, and has high reliability.

Further, as shown in FIGS. 11 and 12, the connecting part 531 is a thickened connecting part 531 having an enlarged outer diameter in the middle of the lever 53. The lever 53 further includes a resistance arm 533 and a power arm 532 which are connected to both sides of the thickened connecting part 531, wherein the power arm 532 is connected to the centrifugal component 51, and the resistance arm 533 is connected to the valve plug component 52.

By enlarging the outer diameter of the connecting part 531 to thicken the connecting part 531, the rotating shaft hole 534 and the avoidance hole 535 are formed, meanwhile, the strength of the lever 53 itself is effectively ensured, so that the lever 53 is not easily deformed during use, and the durability is increased. The problems are effectively avoided that low strength and indurability of the lever 53 are caused by the rotating shaft hole 534 and the avoidance hole 535.

Further, the thickened connection part 531 is of a cylindrical structure with an enlarged outer diameter and a first extension length L1, and an extension direction of the thickened connection part 531 is perpendicular to a swinging direction of the lever 53.

The power arm 532 and the resistance arm 533 are of plate-shaped structures connected on both sides of the thickened connecting part 531 and respectively having a first width H1. The power arm 532 is connected to a lower part of the side, close to the centrifugal component 51, of the thickened connecting part 531, and the power arm 532 is slightly inclined upwards from the thickened connecting part 531 toward the centrifugal component 51, and is fixedly connected to the centrifugal component 51.

As shown in FIGS. 11 and 12, the resistance arm 533 is connected to an upper part of the side, close to the valve plug component 52, of the thickened connecting part 531. The resistance arm 533 is slightly inclined downwards from the thickened connecting part 531 toward the valve plug component 52, and is hinged with the valve plug component 52. The entire lever 53 forms a combination structure like "6" and "9" or two whistle portions superimposed. By the above structure of the lever 53, the centrifugal component 51 can more easily drive the valve plug component 52 to move.

Preferably, the first width H1 is equal to the first extension length L1, a thickness of the power arm 532 is gradually decreased from the thickened connecting part 531 toward the centrifugal component 51, and a thickness of the resistance arm 533 is gradually decreased from the thickened connecting part 531 toward the valve plug component 52. An end, connected to the thickened connecting part 531, of the power arm 532 or the resistance arm 533 is relatively thicker, so that the structural strength of the power arm 532 or the resistance arm 533 is ensured, and the weight of the entire centrifugal drainage mechanism 5 is effectively reduced while the material cost is saved by the thickness of the power arm 532 or the resistance arm 533 being gradually decreased.

As shown in FIG. 1, FIG. 2, FIG. 11, and FIG. 12, this embodiment provides a washing machine with the above laundry lifting device 4, including: an inner cylinder 1, and an inner cylinder door 2 mounted in an opening of the inner cylinder 1 and being capable of opening and close the opening. The inner cylinder door 2 and the inner cylinder 1 form a washing chamber for independently holding washing water when washing laundry, when the inner cylinder door 2 is closed,. A water drainage hole is formed in a side wall of the inner cylinder 1, the laundry lifting device 4 is installed at the water drainage hole in an inner wall of the inner cylinder 1, and the centrifugal drainage mechanism 5 can close/open the water drainage hole.

### Embodiment 9

As shown in FIGS. 1, 2 and 9 to 13, this embodiment describes a laundry lifting device 4 for a washing machine on the basis of Embodiment 7. The main problems in Embodiment 7 to be solved are as follows: the centrifugal component 51 of the centrifugal drainage mechanism 5 is easily deflected in position due to high speed rotation and vibration of a washing machine, and normal water drainage is affected, and the centrifugal component 51 is deflected for a long period of time to cause deformation of a lifting rib shell 41 made of a plastic material, resulting in poor appearance fit.

The laundry lifting device 4 in this embodiment further includes a centrifugal drainage mechanism 5 which is attached in the chamber of a lifting rib shell 41, and the centrifugal drainage mechanism 5 can open the water drainage hole for draining water under the action of centrifugal force. In this embodiment, the centrifugal drainage mechanism 5 is fixedly mounted on the mounting cover plate 42.

The centrifugal drainage mechanism 5 includes a centrifugal component 51 and a valve plug component 52. The centrifugal component 51 generates centrifugal motion on a first moving surface under the action of centrifugal force, to drive the valve plug component 52 to open a water drainage hole formed in a body of an inner cylinder 1 of a washing machine for draining water.

As shown in FIGS. 9 to 13, the laundry lifting device 4 in this embodiment further includes a limiting structure 54 fixedly attached on the mounting cover plate 42, the limiting structure 54 is used for limiting the centrifugal component 51 from generating offset motion deviating from the first moving surface.

In this embodiment, through the limiting structure 54 attached on the mounting cover plate 42, the centrifugal component 51 is limited from generating offset motion deviating from the first moving surface, which can effectively prevent the centrifugal component 51 from being deflected during the high-speed rotation of the washing machine, thereby affecting the normal water drainage of the centrifugal drainage mechanism 5.

Further, the centrifugal component 51 includes a balancing weight that moves along a first moving surface under the action of centrifugal force. Due to high speed rotation and vibration of a washing machine, the position of the balancing weight in the laundry lifting device 4 is very likely to be deflected to affect normal water drainage, and the balancing weight is deflected for a long period of time to cause deformation of a lifting rib made of a plastic material, resulting in poor appearance fit.

In this embodiment, the limiting structure 54 includes limiting baffles attached on left and right sides of the balancing weight, and the position of the balancing weight is limited by the limiting baffles disposed on the left and right sides of the balancing weight, thereby effectively preventing the balancing weight from being deflected to the left and right sides under the action of an external force.

Further, as shown in FIGS. 9 and 10, the limiting baffles include a first limiting plate 541 and a second limiting plate 542 which are fixedly attached at intervals on the mounting cover plate 42, and a limit space for allowing the balancing weight to be mounted in a limited mode is formed between the first limiting plate 541 and the second limiting plate 542.

Further, the balancing weight includes a first side wall and a second side wall which are oppositely disposed on left and right sides thereof. The first limiting plate 541 is located outside the first side wall and is parallel to the first side wall of the balancing weight. The second limiting plate 542 is located outside the second side wall, and is parallel to the second side wall of the balancing weight. There is a certain gap distance between the first limiting plate 541 and the first side wall, and there is a certain gap distance between the second limiting plate 542 and the second side wall to avoid interference with normal centrifugal movement of the balancing weight in the first moving surface.

Preferably, the first moving surface is parallel to a radial direction of a cylinder body of a washing machine, and the limiting baffles are extended in a direction parallel to the first moving surface, and preventing the balancing weight from the left and right deviation relative to the first moving surface. The first limiting plate 541 and the second limiting plate 542 prevent the balancing weight from moving on an offset plane perpendicular to the first moving surface.

Preferably, the first limiting plate 541 and the second limiting plate 542 are integrated with the mounting cover plate 42 by injection molding. In the embodiment of the present invention, the first limiting plate 541, the second limiting plate 542 and the mounting cover plate 42 are manufactured by integral injection molding, and the molding process is simple and the manufacturing cost is low.

In this embodiment, the first limiting plate 541 and the second limiting plate 542 are integrally formed on the mounting cover plate 42, which is easier to form and easier to process compared with being disposed inside the lifting rib shell 41.

Further, the laundry lifting device 4 in this embodiment further includes a reinforcing structure for increasing the strength of the limiting baffles.

Preferably, as shown in FIGS. 9 and 10, the reinforcing ribs 543 as the reinforcing structure are connected between the limiting baffles and the mounting cover plate 42. A plurality of the reinforcing ribs 543 is provided, and is spaced apart along the length direction of the limiting baffles. Each of the reinforcing ribs 543 includes a first connecting edge and a second connecting edge which are connected and vertical to each other. The first connecting edges are fixedly connected to the limiting baffles, and the second connecting edges are fixedly connected to the mounting cover plate 42.

More preferably, the reinforcing ribs 543 are integrated with the mounting cover plate 42, the first limiting plate 541, and the second limiting plate 542 by injection molding.

In this embodiment, the first limiting plate 541 and the second limiting plate 542 are attached on the left and right sides of the balancing weight, so that left and right shaking of the balancing weight can be effectively limited, thereby preventing the centrifugal component from being damaged due to resonance and the like. It is avoided that the centrifugal component 51 is deflected for a long period of time to cause deformation of the lifting rib shell 41 made of a plastic material, resulting in poor appearance fit.

Further, the laundry lifting device 4 further includes a positioning structure that limits the deviation of the position of the mounting cover plate 42.

In this embodiment, by arrangement of the positioning structure for limiting the deviation of the mounting cover plate 42 in the laundry lifting device 4, dual functions are taken, that is, it is avoided that the position of the mounting cover plate is deviated within the lifting rib shell 41, the stability of the positions of the first limiting plate 541 and the second limiting plate 542 is ensured, further avoiding the phenomenon of deviation of the position of the balancing weight.

Further, as shown in FIG. 9, the positioning structure includes a first clamping wall 561 and a second clamping wall 562 which are fixedly attached on both sides of the mounting cover plate 42, and the first clamping wall 561 and the second clamping wall 562 are extended along the length direction of the mounting cover plate 42.

As shown in FIGS. 9 and 10, along the length direction of the mounting cover plate 42, the mounting cover plate 42 includes a first elongated edge and a second elongated edge which are opposite to each other, the first clamping wall 561 is attached at a position close to the first elongated edge at an upper side of the mounting cover plate 42, and the second clamping wall 562 is attached at a position close to the second elongated edge at the upper side of the mounting cover plate 42.

The first clamping wall 561 and the second clamping wall 562 may be walls with elongated shape that extend along the length direction of the mounting cover plate 42, or may be the walls that are spaced apart on the mounting cover plate 42.

Further, the positioning structure further includes a first retaining wall 551 and a second retaining wall 552 which are fixedly attached on both sides of the lifting rib shell 41, the first clamping wall 561 is limited and clamped in the first retaining wall 551, and the second clamping wall 562 is limited and clamped in the second retaining wall 552.

Preferably, the first clamping wall 561 and the second clamping wall 562 are attached at positions close to edges on both sides of the mounting cover plate 42, and the first retaining wall 551 and the second retaining wall 552 are formed by side walls on both sides of the lifting rib shell 41.

Specifically, as shown in FIG. 9, the lifting rib shell 41 includes a strip-shaped top wall and side walls connected to both sides of the strip-shaped top wall, and the first retaining wall 551 and the second retaining wall 552 are formed by lower edges of the side walls on both sides of the lifting rib shell 41 vertically extending downward. The first clamping wall 561 and the second clamping wall 562 are respectively limited on the inner sides of the side walls of the lifting rib shell 41.

The first clamping wall 561 abuts on the first retaining wall 551 for limitation, as well as the second clamping wall 562 abuts on the second retaining wall 552 for limitation, so that the coordination between the mounting cover plate 42 and the lifting rib shell 41 is more stable, and the stability of the positions of the first limiting plate 541 and the second limiting plate 542 can be enhanced.

Further, in another more preferred embodiment, the positioning structure further includes a third clamping wall 563 attached on the mounting cover plate 42 and spaced apart from the first clamping wall 561, and a fourth clamping wall 564 attached on the mounting cover plate 42 and spaced apart from the second clamping wall 562. The third clamping wall 563 is located between the first clamping wall 561 and the first limiting plate 541, and the fourth clamping wall 564 is located between the second clamping wall 562 and the second limiting plate 542.

The positioning structure further includes a third retaining wall 553 and a fourth retaining wall 554 which are correspondingly fixedly attached on an inner wall of the lifting rib shell 41. The third clamping wall 563 abuts on the third retaining wall 553 for limitation, and the fourth clamping wall 564 abuts on the fourth retaining wall 554 for limitation.

Further, at least part of the third clamping wall 563 abuts on an outer side or an inner side of the third retaining wall 553 for limitation, and at least part of the fourth clamping wall 564 abuts on an outer side or an inner side of the fourth retaining wall 554 for limitation.

Preferably, an upper end of the third clamping wall 563 abuts on the inner side of the third retaining wall 553 for limitation, and an upper end of the fourth clamping wall 564 abuts on the inner side of the fourth retaining wall 554 for limitation.

As shown in FIG. 9, by means of the limitation between the third clamping wall 563 and the third retaining wall 553, as well as the limitation between the fourth clamping wall 564 and the fourth retaining wall 554, the mounting cover plate 42 is more firmly clamped within the lifting rib shell 41, so that the mounting cover plate 42 does not displace in position in a horizontal direction. It is further ensured that the positions of the first limiting plate 541 and the second limiting plate 542 are stable, and further the movement of the balancing weight is prevented from deviating.

In the above solution, the reinforcing ribs 543 are integrally connected with the third clamping wall 563 and the fourth clamping wall 564.

In particular, each reinforcing rib 543 has a plate-like pentagonal structure. Each reinforcing rib 543 includes a bottom reinforcing edge, and a first side reinforcing edge and a second side reinforcing edge which are perpendicularly connected to the bottom reinforcing edge, wherein the first side reinforcing edge is fixedly connected to the first limiting plate 541 or the second limiting plate 542, and the second side reinforcing edges are fixedly connected to the second limiting plate 542.

As shown in FIG. 10, in this embodiment, a plurality of connecting ribs 565 are connected between the first clamping wall 561 and the third clamping wall 563 as well as between the second clamping wall 562 and the fourth clamping wall 564, the connecting ribs 565 are spaced along the length direction of the mounting cover plate 42 between the first clamping wall 561 and the third clamping wall 563 as well as between the second clamping wall 562 and the fourth clamping wall 564, the stability of structures between the first clamping wall 561 and the third clamping wall 563 as well as between the second clamping wall 562 and the fourth clamping wall 564 is further enhanced by the connecting ribs, and the phenomenon of shaking and deformation is avoided when the clamping wall of the mounting cover plate matched with the retaining walls of the lifting rib shell 41.

Further, the connecting ribs 565 are connecting plates with L-shape respectively connected between the first clamping wall 561 and the third clamping wall 563 as well as between the second clamping wall 562 and the fourth clamping wall 564. By the arrangement of the connecting ribs 565 with L-shape, the robustness of its connection can be ensured, and the material cost can be reduced.

In another embodiment, a plurality of water discharge holes are spaced apart on the mounting cover plate 42 between the first clamping wall 561 and the third clamping wall 563 as well as between the second clamping wall 562 and the fourth clamping wall 564, so that a large amount of residual water is prevented from being accumulated in a groove formed by the first clamping wall 561, the third clamping wall 563, and the mounting cover plate 42 between both clamping walls, or a groove formed by the second clamping wall 562, the fourth clamping wall 564, and the mounting cover plate 42 between both clamping walls. Thereby it is avoided that the water cannot be discharged to generate bacteria and affect the cleaning effect inside a washing machine.

Preferably, at least one water discharge hole is formed on the mounting cover plate 42 between each two connecting ribs 565, to ensure that washing water accumulated in a space between each two connecting ribs 565 can be discharged. Thus there is no possibility to accumulate washing water at any corner position in the mounting cover plate 42.

### Embodiment 10

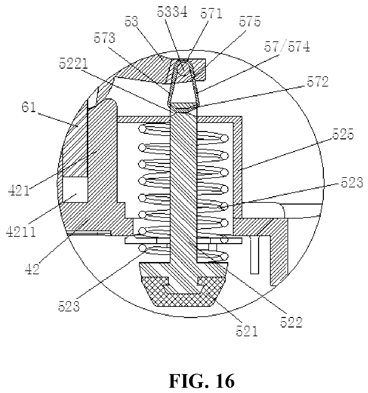

As shown in FIG. 9, FIG. 10, and FIG. 14 to FIG. 16, this embodiment describes a centrifugal drainage mechanism 5 for a washing machine, including: a centrifugal component 51; a valve plug component 52 normally sealing a water drainage hole of a washing machine; and a lever 53. One end of the lever 53 is connected with the centrifugal component 51, and the other end of the lever 53 is connected with the valve plug component 52 by a connecting ring 57. According to the centrifugal drainage mechanism 5 provided by the present application, the lever 53 is connected to the valve plug component 52 by the connecting ring 57, so the following problems of the existing centrifugal drainage mechanism 5 are effectively solved. A lever 53 are hinged with a valve plug component 52 of the existing centrifugal drainage mechanism through a shaft and a shaft hole, so the valve plug component 52 is affected by a biasing force of lever tension, and the position of the valve plug 521 cannot align well with a water drainage hole, thereby the valve plug 521 fails working to affect the sealing effect of an inner cylinder 1.

Further, the inner cylinder 1 is provided with a water drainage hole, and the valve plug component 52 normally seals the water drainage hole. The valve plug component 52 is connected with the centrifugal component 51 by the lever 53, and a middle of the lever 53 is provided with a lever fulcrum which is rotatably matched with a rotating shaft 6. The centrifugal component 51 moves in the radial direction of the inner cylinder toward a circumferential wall of the inner cylinder 1 under the action of centrifugal force, and the centrifugal motion of the centrifugal component 51 is converted to the movement of the valve plug component 52 in the radial direction of the inner cylinder 1 toward the center of the inner cylinder 1 to open the water drainage hole for water drainage.

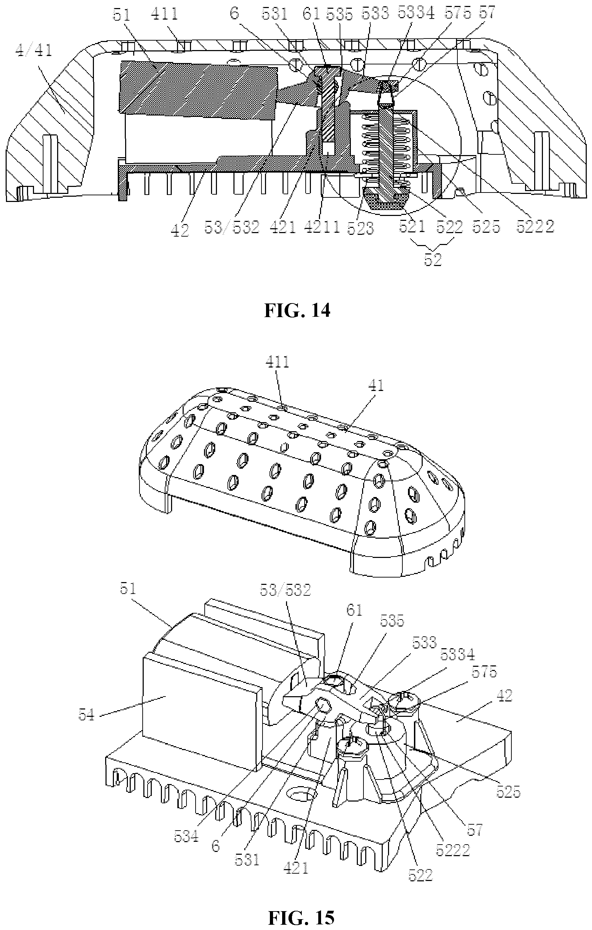

More specifically, as shown in FIGS. 14 and 15, the centrifugal component 51 includes a balancing weight having a certain weight. The lever 53 includes a power arm 532 and a resistance arm 533 which are located on both sides of the lever fulcrum, the power arm 532 is fixedly connected with the centrifugal component 51, and an end of the resistance arm 533 is connected with the valve plug component 52 by the connecting ring 57. The balancing weight moves in the radial direction of the inner cylinder 1 toward a direction away from the center of the inner cylinder 1 under the action of centrifugal force, the balancing weight presses the end of the resistance arm 533 of the lever 53 to move toward the center of the inner cylinder 1 under the action of the lever 53, and the valve plug component 52 is pulled to move toward a direction close to the center of the inner cylinder 1 with a resistance end of the lever 53 by the connecting ring 57 to open the water drainage hole in the inner cylinder 1 for water drainage.

Further, as shown in FIGS. 14 to 16, the valve plug component 52 includes: a valve plug 521 and a valve rod 522. One end of the valve rod 522 is connected with the valve plug 521, and the other end of the valve rod 522 is provided with a valve rod connecting hole 5222. An upper end of the connecting ring 57 is hung on the lever 53, and a lower end of the connecting ring 57 passes through the valve rod connecting hole 5222 to connect the valve rod 522 with the lever 53.

According to the centrifugal drainage mechanism 5 of the present embodiment, the lever 53 is connected with the valve rod 522 by the connecting ring 57. The following problems of the existing centrifugal drainage mechanism 5 are effectively solved. A lever 53 is hinged with a valve plug component 52 of the existing centrifugal drainage mechanism through a shaft and a shaft hole, so the valve plug component 52 is affected by a biasing force of lever tension, and cannot align well with the water drainage hole, thereby the valve plug 521 fails working to affect the sealing effect of the inner cylinder 1. According to the centrifugal drainage mechanism 5 of the present application, the valve plug component 52 is not affected by the biasing force of the tension of the lever 53, and the position of the valve plug 521 can always be kept to align with the water drainage hole in a normal state, so that the valve plug component 52 does not deviate from the water drainage hole, thereby improving the sealing performance and the reliability of the centrifugal drainage mechanism 5.

Further, as shown in FIGS. 14 to 16, the end, matched with the valve rod 522, of the lever 53 is fixedly provided with a connecting beam 5334. The connecting ring 57 is an annular body which is hung on the connecting beam 5334 after passing through the valve rod connecting hole 5222.

In one embodiment, the annular body passes through the valve rod connecting hole 5222 to be directly suspended on the connecting beam 5334.

Preferably, as shown in FIGS. 14 to 16, a peripheral wall of the connecting beam 5334 is provided with a limiting groove which is in fit with the connecting ring 57, and the connecting ring 57 is hung in the limiting groove. The limiting groove is formed by a top wall of the connecting beam 5334 being partially recessed inward along a width direction thereof. The limiting groove corresponds to a position of the valve rod connecting hole 5222, and extends in the same direction as that of the valve rod connecting hole 5222. Through the arrangement of the limiting groove, the connecting ring 57 is hung in the limiting groove of the connecting beam 5334 to limit the connecting ring 57, effectively preventing the connecting ring 57 from sliding back and forth on the connecting beam 5334 to affect the sealing effect of the valve plug 521.

In another embodiment, the connecting beam 5334 is provided with a beam connecting hole, and the connecting ring 57 passes through the valve rod connecting hole 5222 and the beam connecting hole, respectively. The position of the beam connecting hole corresponds to the position of the valve rod connecting hole 5222, and an extending direction of the beam connecting hole is the same as that of the valve rod connecting hole 5222. The annular body passes through the valve rod connecting hole 5222 and the beam connecting hole in sequence to more firmly and stably connect the valve rod 522 with the lever 53.

Further, the annular body includes an arc-shaped hook portion 571 hung on the connecting beam 5334, and a lifting portion 572 matched with the valve rod connecting hole 5222. The arc-shaped hook portion 571 is matched with a radian of an outer peripheral wall of the connecting beam 5334, and the lifting portion 572 passes through the valve rod connecting hole 5222 and is at least partially configured as a straight rod shape. Preferably, the lifting portion 572 includes a straight section, and a first curved section and a second curved section which are connected to both ends of the straight section and are bent upwards.

Further, as shown in FIGS. 14 to 16, the annular body further includes a first connecting section 573 connected between one end of the arc-shaped hook portion 571 and the first curved section, and a second connecting section 574 connected between the other end of the arc-shaped hook portion 571 and the second curved section. Preferably, the arc-shaped hook portion 571, the first connecting section 573, the lifting portion 572, and the second connecting section 574 are sequentially connected end to end to form the connecting ring 57 like as shape of a water drop.

In this embodiment, as shown in FIGS. 14 to 16, the first connecting section 573 or the second connecting section 574 is provided with an opening 575.

Further, in one embodiment, the connecting ring 57 is made of an elastic material, and the opening 575 is elastically deformable, and the opening 575 can be opened or closed under the action of its own elasticity.

For example, the connecting ring 57 may be made of spring steel, elastic engineering plastic such as PEEK, or the like. When the connecting ring 57 connects the valve rod 522 with the lever 53, elastic deformation is occurred on the opening 575 to be open. After the connecting ring 57 passes through the valve rod connecting hole 5222 and is hung on the connecting beam 5334, the deformation of the opening 575 of the connecting ring 57 is recovered under the action of its own elasticity, and the opening is automatically contracted to be closed. It is effectively prevented the connecting beam 5334 or the valve rod 522 from being detached from the connecting ring 57 through the opening 575, so that the lever 53 is not disconnected from the valve plug component 52.

In another embodiment, the connecting ring 57 is made of a non-elastic material, and the opening 575 is closed by a closing mechanism after the valve rod 522 is connected with the lever 53 by the annular body.

For example, the connecting ring 57 may be made of a non-elastic material such as stainless steel, or brass. In one solution, after the connecting ring 57 passes through the valve rod connecting hole 5222 and is connected with the connecting beam 5334, the opening 575 is forced to be closed by a closure tool.

In another solution, the closing mechanism includes a connecting rod. One end of the opening 575 of the annular body may be also provided with a connecting rod and a positive bump, and the other end of the opening 575 of the annular body is provided with a reverse bump. One end of the connecting rod is hinged to the annular body, and the other end of the connecting rod is provided with a positive slot and a reverse slot which respectively correspond to the positive bump and the reverse bump. The the positive slot and the reverse slot of the connecting rod can be positively or reversely buckled respectively with the positive bump and the reverse bump to open or close the opening 575 of the connecting ring 57, and the structure is simple and convenient to use.

Further, the valve rod connecting hole 5222 is a through hole transversely penetrating along a radial direction of the valve rod 522 and formed at an end of the valve rod 522. The valve rod connecting hole 5222 includes a cylindrical hole having a constant inner diameter and located in the middle; and tapered holes located at both ends of the cylindrical hole and gradually expanding outward from inside to outside. The connecting ring 57 can smoothly and quickly penetrate into the valve rod connecting hole 5222 due to the arrangement of enlarging inner diameters of both ends of the valve rod connecting hole 5222, thereby improving the assembly efficiency.

In the above solution, the lifting portion 572 of the annular body penetrates into the valve rod connecting hole 5222, and an outer diameter of the straight section of the lifting portion 572 is matched with an inner diameter of the cylindrical hole of the valve rod connecting hole 5222. The straight section is in the cylindrical hole, and the first curved section and the second curved section are located in the tapered holes.

Further, the end, matched with the valve plug component 52, of the lever 53 is provided with a groove, and the connecting beam 5334 is fixedly connected in the groove.

Preferably, a projection of a central axis of the valve rod connecting hole 5222 intersects with a projection of the connecting beam 5334 on the same horizontal plane. More preferably, the projection of the central axis of the valve rod connecting hole 5222 is perpendicular to the projection of the connecting beam 5334 on the same horizontal plane.

Further, in one embodiment, the connecting ring 57 may be a set of connected rings, and the structure gradually extending outwardly from an innermost ring to an outermost ring is like a paper clip. The outermost ring is respectively in hook connection with the lever 53 and the valve plug component 52. The connecting ring 57 may be formed by bending a metal wire into a structure like the paper clip. The connecting ring 57 in a shape of the paper clip is increased in the structural strength itself, and is prevented from being easily detached from the valve rod 522 or the connecting beam 5334, so the connection between them is more stable.

In another embodiment, the connecting ring 57 includes a plurality of chain links in the shape of a ring, which are connected in series to form a chain-like connecting ring 57. A chain link at an upper end of the connecting ring 57 is connected with the lever 53, and a chain link at a lower end of the connecting ring 57 is connected with the valve plug component 52. The chain link at the upper end can be directly hung on the connecting beam 5334 or hooked in the beam connecting hole, and the chain link at the lower end can pass through the valve rod connecting hole 5222. The flexibility and adjustment of the entire connecting ring 57 with a structure like an iron chain can be increased n, and the length of the entire connecting ring 57 can be adjusted to meet different use requirements by appropriately adding or deleting one or more chain links according to the actual needs during assembly.

As shown in FIG. 1, FIG. 2, FIG. 14 and FIG. 15, this embodiment also provides a laundry lifting device 4, including a lifting rib shell 41 with a chamber inside. The centrifugal drainage mechanism 5 is arranged in the lifting rib shell 41.

Further, the lifting rib shell 41 is a shell with an opening. The laundry lifting device 4 further includes a mounting cover plate 42 blocking the opening of the lifting rib shell 41, and the centrifugal drainage mechanism 5 is fixedly mounted on the mounting cover plate 42. Preferably, as shown in FIGS. 14 and 15, a valve plug mounting seat 525 is fixedly mounted on the mounting cover plate 42 , and the valve plug mounting seat 525 is of a sleeve of which a lower end is open and an upper end is closed. A closed end of the valve plug mounting seat 525 is provided with a through hole for allowing the valve rod 522 to move up and down. A compression spring 523 is arranged between the valve plug mounting seat 525 and the valve plug 521. The valve plug 521 tightly abuts against and blocks the water drainage hole of the inner cylinder 1 under the action of the compression spring 523. The centrifugal component 51 drives the end, matched with the valve plug component 52, of the lever 53 to move upward under the action of centrifugal force during high-speed dewatering, and the valve plug 521 is pulled to move upward by the connecting ring 57 to open the water drainage hole for water drainage.

This embodiment also provides a washing machine provided with the centrifugal drainage mechanism 5 or the laundry lifting device 4.

As shown in FIG. 1, FIG. 2, FIG. 14, and FIG. 15, the washing machine includes: an inner cylinder 1, and an inner cylinder door 2 mounted in an opening of the inner cylinder 1 and being capable of opening and closing the opening. The inner cylinder door 2 and the inner cylinder 1 form a separate washing chamber for independently holding washing water during washing laundry, when the inner cylinder door 2 is closed. A water drainage hole is formed in a side wall of the inner cylinder 1, the laundry lifting device 4 is installed on an inner wall of the inner cylinder 1 at the water drainage hole, and the centrifugal drainage mechanism 5 can close and open the water drainage hole.

### Embodiment 11

As shown in FIG. 1, FIG. 2, FIG. 14, and FIG. 15, this embodiment provides a laundry lifting device 4 for a washing machine on the basis of Embodiment 10. By fastening the rotating shaft 6 to a mounting cover plate 42 through a fixed support 61, it is achieved to efficiently and fast connect a centrifugal drainage mechanism 5 with the mounting cover plate 42, and the problems are effectively solved opoor reliability and low stability of the existing centrifugal drainage mechanism 5.

Specifically, the present application discloses a laundry lifting device 4 for a washing machine, including: a lifting rib shell 41 provided with an cavity inside with an opening; a mounting cover plate 42 mounted at the opening of the lifting rib shell 41; and a centrifugal drainage mechanism 5. The centrifugal drainage mechanism includes a centrifugal component 51 and a valve plug component 52 which are attached within the lifting rib shell, and a lever 53 connected between the centrifugal component 51 and the valve plug component 52. A middle of the lever 53 is provided with a rotating fulcrum, the rotating fulcrum is rotatably connected to a rotating shaft 6, and the rotating shaft 6 is fixedly supported on the mounting cover plate 42 by a fixed support 61. According to the laundry lifting device 4 for a washing machine in this embodiment, by fastening the rotating shaft 6 to the mounting cover plate 42 through the fixed support 61, the rotating shaft 6 is efficiently and fast assembled with the mounting cover plate 42, the connection is stable and reliable. The problems are effectively solved poor reliability and low stability of the existing centrifugal drainage mechanism 5.

As shown in FIG. 2, FIG. 14, and FIG. 15, the laundry lifting device 4 in this embodiment is composed of two parts, one is the lifting rib shell 41 and the other is the mounting cover plate 42, which can be connected by screws or bolts and fixing holes to become an integrated part. The mounting cover plate 42 or the lifting rib shell 41 is provided with a fixing column or a fixing hole, the laundry lifting device 4 is connected to the inner cylinder 1 by screws/bolts, and the valve plug component 52 of the centrifugal drainage mechanism 5 attached in the lifting rib shell 41 corresponds to the water drainage hole of the inner cylinder 1.

As shown in FIG. 1, FIG. 2 and FIG. 15, the lifting rib shell 41 is provided with spray holes 411, so that water can spray on laundry through the spray holes after being lifted to a high place. The lifting rib shell 41 or the mounting cover plate 42 is provided with a water inlet for communicating an interior of the lifting rib shell 41 with an interior of the inner cylinder 1.

Further, as shown in FIGS. 14 and 15, the rotating shaft 6 is provided with a fixing portion matched with the fixed support 61, and the fixed support 61 is fixedly connected with the fixing portion to support and fix the rotating shaft 6 to the mounting cover plate 42. The fixing portion may be a partial structure of the fixed support 61, such as a connecting hole formed in the rotating shaft 6 or a clamping platform or a clamping slot integrally formed in the rotating shaft 6. The fixed support 61 may be fixedly connected to the connecting hole or the clamping platform or the clamping slot to support and fix the rotating shaft 6 to the mounting cover plate 42.

Further, as shown in FIGS. 14 and 15, in this embodiment, the fixed support 61 is a screw having an extended length, and the fixing portion is a threaded through hole formed in the rotating shaft 6, and the screw passes through the threaded through hole to support and fix the rotating shaft 6 at a set height position above the mounting cover plate 42. By adopting the screw as the fixed support 61 for fixedly connecting the rotating shaft 6 and the mounting cover plate 42, it is quickly and efficiently to assemble, and disassemble. Not only the connection is firm and reliable, and not easy to loosen, but also the structure is simple, the cost is low, and the use and popularization are easy.

In the above solution, the entire rotating shaft 6 may be provided as a cylindrical structure having a relatively great diameter to easily form the threaded through hole, so that the threaded through hole can be directly formed in the rotating shaft 6. Or, an extended connecting part extending outward may also be formed on an outer wall of the rotating shaft 6, and the threaded through hole is formed in the extended connecting part.

Further, in this embodiment, both ends of the rotating shaft 6 are respectively in fit with the lever 53 in rotating manner, the threaded through hole is formed in a middle of the rotating shaft 6, and the screw is fixedly connected at the middle of the rotating shaft 6 for support. Preferably, the middle of the rotating shaft 6 is thickened, and the threaded through hole is formed in the thickened middle of the rotating shaft 6. By the above arrangement, the strength of the rotating shaft 6 can be effectively ensured, and the problems are effectively solved that the strength of the rotating shaft 6 is reduced, and the rotating shaft 6 is easily deformed during use due to the formation of the threaded through hole.

Further, as shown in FIGS. 14 and 15, a bracket 421 is fixedly attached on the mounting cover plate 42, the bracket 421 is provided with a threaded connection groove 4211 having an extended length and matched with the screw, and the screw is fixedly connected in the threaded connection groove 4211. The bracket 421 is of a pillar structure fixedly attached on the mounting cover plate 42, and a cylindrical groove is formed at a position corresponding to the screw in the pillar structure, and an inner wall of the cylindrical groove is provided with threads to form the threaded connection groove 4211. An inner diameter of the threaded connection groove 4211 is matched with an outer diameter of the screw. The screw passes through the threaded through hole in the rotating shaft 6, and an end of the screw extends into and is threadedly and fixedly connected in the threaded connection groove 4211.

In the above solution, the screw is fixedly connected to the rotating shaft 6 and the mounting cover plate 42 by threaded connection, so that the structure is simple, the connection is quick and efficient, and the entire laundry lifting device 4 has higher reliability and higher stability.

Preferably, the bracket 421 is used for supporting and fixing the rotating shaft 6, and located at a middle of the lever 53 for supporting the lever 53. In this embodiment, an upper end face of the bracket 421 is provided with an arc-shaped support surface matched with the lever 53. Through the above design, the bracket 421 provides a more stable and gentle supporting force for the lever 53, and the bracket 421 is located under the lever 53 for support and shares part of the weights of the centrifugal component 51 and the lever 53, so that it is effectively avoided that the rotating shaft 6 bears too much pressure and is prone to fracture or deformation when only the rotating shaft 6 provides full support for the lever 53.

Preferably, the bracket 421 and the mounting cover plate 42 are integrated as a whole, and the bracket 421 is of a pillar structure with a certain extension length which is integrally formed on the mounting cover plate 42 by injection molding. The pillar structure has an extended width matched with a width of the lever 53, and supports on a fulcrum position in the middle of the lever 53.

Further, as shown in FIGS. 14 and FIG. 15, the lever 53 includes a connecting part 531 located at a middle fulcrum, the connecting part 531 is provided with a rotating shaft hole 534 matched with the rotating shaft 6 in a first direction, and the connecting part 531 is provided with an avoidance hole 535 for providing a space for the fixed support 61 in a second direction.

Preferably, the first direction is a horizontal direction, the second direction is a vertical direction, and the avoidance hole 535 is a through hole having an elongated cross section which runs through from top to bottom in the connecting part 531 to provide a sufficient space for the screw.

In the above solution, as shown in FIGS. 14 and 15, the avoidance hole 535 effectively provides a space for the screw, so a nut at an end of the screw is hidden in the avoidance hole 535. The end of the screw is prevented from being exposed outside the lever 53, from easily scratching with other components or interfering with the arrangement of other components. The screw is not visible from the outside by the above design, improving the overall aesthetics.

When the centrifugal drainage valve mechanism is assembled, the connecting part 531 of the lever 53 can be placed at an upper part of the bracket 421, the threaded connection groove 4211 in the bracket 421 is ensured to correspond to the avoidance hole 535 in the lever 53. The rotating shaft 6 passes through the rotating shaft hole 534 in the lever 53, and the screw passes through the threaded through hole in the rotating shaft 6 to be fixedly connected to the threaded connection groove 4211 in the bracket 421, so that the rotating shaft 6 is fastened to the bracket 421, and the assembling connection is simple and efficient, and has high reliability.

Further, as shown in FIGS. 14 and 15, the connecting part 531 is a thickened connecting part 531 having an enlarged outer diameter in the middle of the lever 53. The lever 53 further includes a resistance arm 533 and a power arm 532 which are connected to both sides of the thickened connecting part 531, wherein the power arm 532 is connected to the centrifugal component 51, and the resistance arm 533 is connected to the valve plug component 52.

By enlarging the outer diameter of the connecting part 531 to thicken the connecting part 531, the rotating shaft hole 534 and the avoidance hole 535 are formed, meanwhile, the strength of the lever 53 itself is effectively ensured, so that the lever 53 is not easily deformed during use, and the durability is increased. The problems are effectively solved that low strength and indurability of the lever 53 are caused by the rotating shaft hole 534 and the avoidance hole 535.

Further, the thickened connection part 531 is of a cylindrical structure with an enlarged outer diameter and a first extension length L1, and an extension direction of the thickened connection part 531 is perpendicular to a swinging direction of the lever 53.

The power arm 532 and the resistance arm 533 are of plate-shaped structures connected on both sides of the thickened connecting part 531 and respectively having a first width H1. The power arm 532 is connected to a lower part of the side, close to the centrifugal component 51, of the thickened connecting part 531; and the power arm 532 is slightly inclined upwards from the thickened connecting part 531 toward the centrifugal component 51, and is fixedly connected to the centrifugal component 51.

As shown in FIGS. 14 and 15, the resistance arm 533 is connected to an upper part of the side, close to the valve plug component 52, of the thickened connecting part 531. The resistance arm 533 is slightly inclined downwards from the thickened connecting part 531 toward the valve plug component 52, and is hinged with the valve plug component 52. The entire lever 53 forms a combination structure like "6" and "9" or two whistle portions superimposed. By the above structure of the lever 53, the centrifugal component 51 can more easily drive the valve plug component 52 to move.

Preferably, the first width H1 is equal to the first extension length L1, a thickness of the power arm 532 is gradually decreased from the thickened connecting part 531 toward the centrifugal component 51, and a thickness of the resistance arm 533 is gradually decreased from the thickened connecting part 531 toward the valve plug component 52. An end, connected to the thickened connecting part 531, of the power arm 532 or the resistance arm 533 is relatively thicker, so that the structural strength of the power arm 532 or the resistance arm 533 is ensured, and the weight of the entire centrifugal drainage mechanism 5 is reduced while the material cost is saved by the thickness of the power arm 532 or the resistance arm 533being gradually reduced.

### Embodiment 12

As shown in FIGS. 1, 2, 9, 10 and 14 to 16, this embodiment provides a laundry lifting device 4 for a washing machine on the basis of Embodiment 10. The main problem in Embodiment 10 to be solved are as follows: the centrifugal component 51 of the centrifugal drainage mechanism 5 is easily deflected in position due to high speed rotation and vibration of a washing machine, and normal water drainage is affected, and the centrifugal component 51 is deflected for a long period of time to cause deformation of a lifting rib shell 41 made of a plastic material, resulting in poor appearance fit.

The laundry lifting device 4 in this embodiment further includes a centrifugal drainage mechanism 5 which is attached in a chamber of a lifting rib shell 41, and the centrifugal drainage mechanism 5 can open the water drainage hole for draining water under the action of centrifugal force. In this embodiment, the centrifugal drainage mechanism 5 is fixedly mounted on the mounting cover plate 42.

The centrifugal drainage mechanism 5 includes a centrifugal component 51 and a valve plug component 52. The centrifugal component 51 generates centrifugal motion on a first moving surface under the action of centrifugal force, to drive the valve plug component 52 to open a water drainage hole formed in a body of an inner cylinder 1 of a washing machine for draining water.

As shown in FIGS. 14 to 16, the laundry lifting device 4 in this embodiment further includes a limiting structure 54 fixedly attached on the mounting cover plate 42, the limiting structure 54 is used for limiting the centrifugal component 51 from generating offset motion deviating from the first moving surface.

In this embodiment, through the limiting structure 54 attached on the mounting cover plate 42, the centrifugal component 51 is limited from generating offset motion deviating from the first moving surface, which can effectively prevent the centrifugal component 51 from being deflected during the high-speed rotation of the washing machine, thereby affecting the normal water drainage of the centrifugal drainage mechanism 5.

Further, the centrifugal component 51 includes a balancing weight that moves along a first moving surface under the action of centrifugal force. Due to high speed rotation and vibration of a washing machine, the position of the balancing weight in the laundry lifting device 4 is very likely to be deflected to affect normal water drainage, and the balancing weight is deflected for a long period of time to cause deformation of a lifting rib made of a plastic material, resulting in poor appearance fit.

In this embodiment, the limiting structure 54 includes limiting baffles attached on left and right sides of the balancing weight, and the position of the balancing weight is limited by the limiting baffles disposed on the left and right sides of the balancing weight, thereby effectively preventing the balancing weight from being deflected to the left and right sides under the action of an external force.

Further, as shown in FIGS. 9 and 10, the limiting baffles include a first limiting plate 541 and a second limiting plate 542 which are fixedly attached at intervals on the mounting cover plate 42, and a limit space for allowing the balancing weight to be mounted in a limited mode is formed between the first limiting plate 541 and the second limiting plate 542.

Further, the balancing weight includes a first side wall and a second side wall which are oppositely disposed on left and right sides thereof. The first limiting plate 541 is located outside the first side wall and is parallel to the first side wall of the balancing weight. The second limiting plate 542 is located outside the second side wall, and is parallel to the second side wall of the balancing weight. There is a certain gap distance between the first limiting plate 541 and the first side wall, and there is a certain gap distance between the second limiting plate 542 and the second side wall, to avoid interference with normal centrifugal movement of the balancing weight in the first moving surface.

Preferably, the first moving surface is parallel to a radial direction of a cylinder body of a washing machine, and the limiting baffles are extended in a direction parallel to the first moving surface, and preventing the balancing weight from the left and right deviation relative to the first moving surface. The first limiting plate 541 and the second limiting plate 542 prevent the balance weight from moving on an offset plane perpendicular to the first moving surface.

Preferably, the first limiting plate 541 and the second limiting plate 542 are integrated with the mounting cover plate 42 by injection molding. In the embodiment of the present invention, the first limiting plate 541, the second limiting plate 542 and the mounting cover plate 42 are manufactured by integral injection molding, and the molding process is simple and the manufacturing cost is low.

In this embodiment, the first limiting plate 541 and the second limiting plate 542 are integrally formed on the mounting cover plate 42, which is easier to form and easier to process compared with being disposed inside the lifting rib shell 41.

Further, the laundry lifting device 4 in this embodiment further includes a reinforcing structure for increasing the strength of the limiting baffles.

Preferably, as shown in FIGS. 9 and 10, reinforcing ribs 543 as the reinforcing structure are connected between the limiting baffles and the mounting cover plate 42. A plurality of the reinforcing ribs 543 are provided, and are spaced apart along the length direction of the limiting baffles. Each of the reinforcing ribs 543 includes a first connecting edge and a second connecting edge which are connected and vertical to each other. The first connecting edges are fixedly connected to the limiting baffles, and the second connecting edges are fixedly connected to the mounting cover plate 42.

More preferably, the reinforcing ribs 543 are integrated with the mounting cover plate 42, the first limiting plate 541, and the second limiting plate 542 by injection molding.

In this embodiment, the first limiting plate 541 and the second limiting plate 542 are attached on the left and right sides of the balancing weight, so that left and right shaking of the balancing weight can be effectively limited, thereby preventing the centrifugal component from being damaged due to resonance and the like. It is avoided that the centrifugal component 51 is deflected for a long period of time to cause deformation of the lifting rib shell 41 made of a plastic material, resulting in poor appearance fit.

Further, the laundry lifting device 4 further includes a positioning structure that limits the deviation of the position of the mounting cover plate 42.

In this embodiment, by arrangement of the positioning structure for limiting the deviation of the mounting cover plate 42 in the laundry lifting device 4, dual functions are taken, that is, it is avoided that the position of the mounting cover plate is deviated within the lifting rib shell 41, and the stability of the positions of the first limiting plate 541 and the second limiting plate 542 is ensured, further avoiding the phenomenon of deviation of the position of the balancing weight.

Further, as shown in FIG. 9, the positioning structure includes a first clamping wall 561 and a second clamping wall 562 which are fixedly attached on both sides of the mounting cover plate 42, and the first clamping wall 561 and the second clamping wall 562 are extended along the length direction of the mounting cover plate 42.

As shown in FIGS. 9 and 10, along the length direction of the mounting cover plate 42, the mounting cover plate 42 includes a first elongated edge and a second elongated edge which are opposite to each other, the first clamping wall 561 is attached at a position close to the first elongated edge at an upper side of the mounting cover plate 42, and the second clamping wall 562 is attached at a position close to the second elongated edge at the upper side of the mounting cover plate 42.

The first clamping wall 561 and the second clamping wall 562 may be walls with elongated shape that extend along the length direction of the mounting cover plate 42, or may be the walls that are spaced apart on the mounting cover plate 42.

Further, the positioning structure further includes a first retaining wall 551 and a second retaining wall 552 which are fixedly attached on both sides of the lifting rib shell 41, the first clamping wall 561 is limited and clamped in the first retaining wall 551, and the second clamping wall 562 is limited and clamped in the second retaining wall 552.

Preferably, the first clamping wall 561 and the second clamping wall 562 are attached at positions close to edges on both sides of the mounting cover plate 42, and the first retaining wall 551 and the second retaining wall 552 are formed by side walls on both sides of the lifting rib shell 41.

Specifically, as shown in FIG. 9, the lifting rib shell 41 includes a strip-shaped top wall and side walls connected to both sides of the strip-shaped top wall, and the first retaining wall 551 and the second retaining wall 552 are formed by lower edges of the side walls on both sides of the lifting rib shell 41 vertically extending downward. The first clamping wall 561 and the second clamping wall 562 are respectively limited on the inner sides of the side walls of the lifting rib shell 41.

The first clamping wall 561 abuts on the first retaining wall 551 for limitation, as well as the second clamping wall 562 abuts on the second retaining wall 552 for limitation, so that the coordination between the mounting cover plate 42 and the lifting rib shell 41 is more stable, and the stability of the positions of the first limiting plate 541 and the second limiting plate 542 can be enhanced.

Further, in another more preferred embodiment, as shown in FIG. 9, the positioning structure further includes a third clamping wall 563 attached on the mounting cover plate 42 and spaced apart from the first clamping wall 561, and a fourth clamping wall 564 attached on the mounting cover plate 42 and spaced apart from the second clamping wall 562. The third clamping wall 563 is located between the first clamping wall 561 and the first limiting plate 541, and the fourth clamping wall 564 is located between the second clamping wall 562 and the second limiting plate 542.

The positioning structure further includes a third retaining wall 553 and a fourth retaining wall 554 which are correspondingly fixedly attached on an inner wall of the lifting rib shell 41. The third clamping wall 563 is abuts on the third retaining wall 553 for limitation, and the fourth clamping wall 564 abuts on the fourth retaining wall 554 for limitation.

Further, at least part of the third clamping wall 563 is abuts on an outer side or an inner side of the third retaining wall 553 for limitation, and at least part of the fourth clamping wall 564 is abuts on an outer side or an inner side of the fourth retaining wall 554 for limitation.

Preferably, an upper end of the third clamping wall 563 is abuts on the inner side of the third retaining wall 553 for limitation, and an upper end of the fourth clamping wall 564 is abuts on the inner side of the fourth retaining wall 554 for limitation.

As shown in FIG. 9, by means of the limitation between the third clamping wall 563 and the third retaining wall 553, as well as the limitation between the fourth clamping wall 564 and the fourth retaining wall 554, the mounting cover plate 42 is more firmly clamped within the lifting rib shell 41, so that the mounting cover plate 42 does not displace in position in a horizontal direction. It is further ensured that the positions of the first limiting plate 541 and the second limiting plate 542 are stable, and further the movement of the balancing weight is prevented from deviating.

In the above solution, the reinforcing ribs 543 are integrally connected with the third clamping wall 563 and the fourth clamping wall 564.

In particular, each reinforcing rib 543 has a plate-like pentagonal structure. Each reinforcing rib 543 includes a bottom reinforcing edge, and a first side reinforcing edge and a second side reinforcing edge which are perpendicularly connected to the bottom reinforcing edge, wherein the first side reinforcing edge is fixedly connected to the first limiting plate 541 or the second limiting plate 542, and the second side reinforcing edges are fixedly connected to the second limiting plate 542.

As shown in FIG. 10, in this embodiment, a plurality of connecting ribs 565 are connected between the first clamping wall 561 and the third clamping wall 563 as well as between the second clamping wall 562 and the fourth clamping wall 564, the connecting ribs 565 are spaced along the length direction of the mounting cover plate 42 between the first clamping wall 561 and the third clamping wall 563 as well as between the second clamping wall 562 and the fourth clamping wall 564. The stability of structures between the first clamping wall 561 and the third clamping wall 563 as well as between the second clamping wall 562 and the fourth clamping wall 564 is further enhanced by the connecting ribs, and the phenomenon of shaking and deformation is avoided when the clamping walls of the mounting cover plate are matched with the retaining walls of the lifting rib shell 41.

Further, the connecting ribs 565 are connecting plates with L-shape respectively connected between the first clamping wall 561 and the third clamping wall 563 as well as between the second clamping wall 562 and the fourth clamping wall 564. By the arrangement of the connecting ribs 565 with L-shape, the robustness of its connection can be ensured, and the material cost can be reduced.

In another embodiment, a plurality of water discharge holes are spaced apart on the mounting cover plate 42 between the first clamping wall 561 and the third clamping wall 563 as well as between the second clamping wall 562 and the fourth clamping wall 564, so that a large amount of residual water is prevented from being accumulated in a groove formed by the first clamping wall 561, the third clamping wall 563, and the mounting cover plate 42 between both clamping walls, or a groove formed by the second clamping wall 562, the fourth clamping wall 564, and the mounting cover plate 42 between both clamping walls. Thereby it is avoided that the water cannot be discharged to generate bacteria and affect the cleaning effect inside a washing machine.

Preferably, at least one water discharge hole is formed on the mounting cover plate 42 between each two connecting ribs 565 to ensure that washing water accumulated in a space between each two connecting ribs 565 can be discharged. Thus there is no possibility of accumulate washing water at any corner position in the mounting cover plate 42.

It should be noted that in various embodiments of the present invention, the "upper end", "lower end", "upward", and "downward" are not intended to indicate that the device or element referred to must have a particular orientation, but for simplicity of description, in this embodiment, a direction close to a center of an inner cylinder is simply described as an "upper end" or "upward" and a direction away from the center of the inner cylinder and close to a peripheral wall of the inner cylinder is simply described as an "lower end" or "downward".

The above description is only preferred embodiments of the present invention, and is not intended to limit the present invention in any way. Although the present invention has been disclosed in the preferred embodiments, it is not intended to limit the present invention. Any technician familiar with this patent can make some changes or modifications to equivalent embodiments with equivalent changes by using the above-mentioned suggestive technical contents without departing from the scope of the technical solution of the present invention. However, any simple amendments, equivalent changes and modifications made to the above embodiments according to the technical essence of the present invention without departing from the contents of the technical solution of the present invention are still within the scope of the solution of the present invention.

## Claims

1. A centrifugal drainage mechanism for a washing machine, comprising, a centrifugal component, being configured of moving under a centrifugal force; a valve plug component, normally sealing a water drainage hole of a washing machine; and a lever, wherein
a middle of the lever is rotatably supported and fixed, one end of the lever is fixedly connected to the centrifugal component, and the other end of the lever is abutted against the valve plug component to be in contact with the valve plug component; and
the centrifugal component is configured to drive, under a centrifugal force, the end of the lever, which is matched with the valve plug component, to rotate in a direction away from the valve plug component, thereby allowing the valve plug component to move accordingly to open the water drainage hole.

2. The centrifugal drainage mechanism for a washing machine according to claim 1, wherein, the valve plug component comprises: a valve plug, normally sealed at the water drainage hole of a washing machine, a valve rod, and an elastic element, wherein,
an upper end of the valve rod is in contact with the other end of the lever, and is limited under the lever, and a lower end of the valve rod is connected to the valve plug;
the elastic element is configured to exert an upward pushing or pulling force on the valve rod, so as to drive the valve plug to move upward to open the water drainage hole when the end, matched with the valve rod, of the lever rotates upwards;
preferably, the elastic element comprises a compression spring sleeving the valve rod, and an upper end of the compression spring is limited and connected to the valve rod.

3. The centrifugal drainage mechanism for a washing machine according to claim 2, wherein, the upper end of the valve rod is provided with an abutting contact portion having an enlarged outer diameter, and the other end of the lever abuts against the abutting contact portion.

4. The centrifugal drainage mechanism for a washing machine according to claim 3, wherein, an upper surface of the abutting contact portion has a curved surface structure with an arc-shape; a lower surface of the abutting contact portion has a flat-walled structure, and
the upper end of the compression spring compressively abuts against the lower surface of the abutting contact portion;
preferably, an annular pressing plate is connected to the upper end of the compression spring, and the annular pressing plate abuts against the lower surface of the abutting contact portion.

5. The centrifugal drainage mechanism for a washing machine according to any one of claims 1 to 4, wherein, the lever comprises a power arm, connected to the centrifugal component;
a resistance arm, pressed against the valve plug component, and being in contact with the valve plug component; and
a rolling element, attached on an end of the resistance arm, and the rolling element being in point contact with the valve plug component.

6. The centrifugal drainage mechanism for a washing machine according to claim 5, wherein, the rolling element is a roller mounted on the end of the resistance arm of the lever.

7. The centrifugal drainage mechanism for a washing machine according to claim 5, wherein, the resistance arm of the lever is provided with a notch groove for accommodating and mounting the rolling element; and the rolling element is rotatably arranged within the notch groove, and
a connecting rotating shaft is fixedly attached within the notch groove, and the rolling element is rotatably connected to the connecting rotating shaft.

8. A laundry lifting device with the centrifugal drainage mechanism according to any one of claims 1 to 7, comprising: a lifting rib shell provided with a cavity inside having an opening, and a mounting cover plate mounted at the opening of the lifting rib shell, wherein, the centrifugal drainage mechanism is arranged within the lifting rib shell, and fixedly mounted on the mounting cover plate.

9. The laundry lifting device according to claim 8, wherein, the mounting cover plate is provided with a through hole for allowing the valve rod of the valve plug component to pass through;
an upper end of the valve rod is in contact with the lever located in the lifting rib shell, and a lower end of the valve rod is extended out of the mounting cover plate via the through hole to be connected to the valve plug; and
an elastic element is arranged between the mounting cover plate and the valve rod, and the elastic element being in compressive state is arranged between the mounting cover plate and the valve rod;
preferably, the elastic element is a compression spring fixedly attached on the mounting cover plate and sleeving the valve rod, one end of the compression spring is fixedly connected to the mounting cover plate, and the other end of the compression spring compressively abuts against the valve rod.

10. A washing machine provided with the centrifugal drainage mechanism according to any one of claims 1 to 7 or the laundry lifting device according to any one of claim 8 or 9.

11. A laundry lifting device for a washing machine, comprises, a lifting rib shell provided with an cavity inside with an opening, a mounting cover plate mounted at the opening of the lifting rib shell, and a centrifugal drainage mechanism; wherein,
the centrifugal drainage mechanism comprises a centrifugal component and a valve plug component, arranged within the lifting rib shell; and a lever, connected between the centrifugal component and the valve plug component;
a middle of the lever is rotatably connected to a rotating shaft, and the rotating shaft is supported and fixed to the mounting cover plate by a fixed support.

12. The laundry lifting device for a washing machine according to claim 11, wherein, the rotating shaft is provided with a fixing portion matched with the fixed support, and the fixed support is fixedly connected with the fixing portion to support and fix the rotating shaft to the mounting cover plate.

13. The laundry lifting device for a washing machine according to claim 12, wherein, the fixed support is a screw having an extended length, and the fixing portion is a threaded through hole formed in the rotating shaft, and the screw passes through the threaded through hole to support and fix the rotating shaft at a set height position above the mounting cover plate.

14. The laundry lifting device for a washing machine according to claim 13, wherein, both ends of the rotating shaft are respectively in fit with the lever in rotating manner, the threaded through hole is formed in a middle of the rotating shaft, and the screw is fixedly supported at the middle of the rotating shaft.

15. The laundry lifting device for a washing machine according to claim 13, wherein, a bracket is fixed on the mounting cover plate, the bracket is provided with a threaded connection groove having an extended length and matched with the screw, and the screw is fixedly connected in the threaded connection groove;
preferably, the bracket is located at a middle of the lever for supporting the lever, and an upper end face of the bracket is provided with an arc-shaped support surface matched with the lever;
preferably, the bracket and the mounting cover plate are integrated as a whole.

16. The laundry lifting device for a washing machine according to any one of claims 11 to 15, wherein, the lever comprises a connecting part located at a middle fulcrum,
the connecting part is provided with a rotating shaft hole matched with the rotating shaft in a first direction, and the connecting part is provided with an avoidance hole for providing a space for the fixed support in a second direction;
preferably, the first direction is a horizontal direction, the second direction is a vertical direction, and the avoidance hole is a through hole having an elongated cross section which runs through from top to bottom in the connecting part.

17. The laundry lifting device for a washing machine according to claim 16, wherein, the connecting part is a thickened connecting part having an enlarged outer diameter in the middle of the lever, and
the lever further includes a resistance arm and a power arm which are connected to both sides of the thickened connecting part, wherein the power arm is connected to the centrifugal component, and the resistance arm is connected to the valve plug component.

18. The laundry lifting device for a washing machine according to claim 17, wherein, the thickened connecting part has a cylindrical structure with an enlarged outer diameter and a first extension length L1, and an extension direction of the thickened connecting part is perpendicular to a swinging direction of the lever;
the power arm and the resistance arm are of plate-shaped structures connected on both sides of the thickened connecting part and respectively having a first width H1;
the power arm is connected to a lower part of the side, close to the centrifugal component, of the thickened connecting part, and the resistance arm is connected to an upper part of the side, close to the valve plug component, of the thickened connecting part;
preferably, the first width H1 is equal to the first extension length L1, and a thickness of the power arm/the resistance arm is gradually decreased from the thickened connecting part toward the centrifugal component/the valve plug component.

19. The laundry lifting device for a washing machine according to claim 18, wherein, the valve plug component includes a valve plug and a valve rod, and an upper end of the valve rod is rotationally connected with the resistance arm through a valve plug rotating shaft, and a lower end of the valve rod is connected with the valve plug; and
the end, matched with the valve plug component, of the resistance arm is provided with an open slot for receiving the valve rod, the open slot includes a first side wall and a second side wall which are opposite to each other, and each of the first side wall and the second side wall is provided with a hole matching with the valve plug rotating shaft.

20. A washing machine provided with the laundry lifting device according to any one of claims 11 to 19.

21. A centrifugal drainage mechanism for a washing machine, comprising, a centrifugal component; a valve plug component, normally sealing a water drainage hole of a washing machine; and a lever, wherein,
one end of the lever is fixedly connected to the centrifugal component, and the other end of the lever is in limited connection with the valve plug component by a ball joint connection structure.

22. The centrifugal drainage mechanism for a washing machine according to claim 21, wherein, the ball joint connection structure comprises a ball joint housing and a ball joint limited within the ball joint housing;
the ball joint housing is fixedly attached on the lever, and the ball joint is attached on the valve plug component; or,
the ball joint housing is fixedly attached on the valve plug component, and the ball joint is attached on the lever.

23. The centrifugal drainage mechanism for a washing machine according to claim 22, wherein, the valve plug component comprises, a valve plug, normally sealing a water drainage hole of a washing machine; and a valve rod, wherein
one end of the valve rod is connected to the valve plug, the other end of the valve rod is in limited connection with the lever, and the ball joint or the ball joint housing is fixedly attached on an end of the valve rod.

24. The centrifugal drainage mechanism for a washing machine according to claim 23, wherein, the ball joint is of a spherical structure, the ball joint housing is of a hollow hemispherical structure, and the ball joint housing is provided with a hemispherical cavity matched with an outer peripheral wall of the ball joint;
preferably, the ball joint housing is fixedly attached at the end of the lever, the ball joint is fixedly attached at the end of the valve rod, and
the side, facing the valve plug component, of the ball joint housing is provided with an opening having an inner diameter smaller than a diameter of the ball joint.

25. The centrifugal drainage mechanism for a washing machine according to claim 23, wherein, the ball joint and the valve rod are integrated a whole, and an upper end of the valve rod is configured into a ball joint like a spherical shape;
preferably, the ball joint and the valve rod are coaxially arranged.

26. The centrifugal drainage mechanism for a washing machine according to claim 22, wherein, the ball joint housing and the lever are integrated a whole,
the end, matched with the valve plug component, of the lever is configured into a hollow structure with a cavity inside to form the ball joint housing;
preferably, there is a movable gap between the ball joint housing and the ball joint.

27. The centrifugal drainage mechanism for a washing machine according to any one of claims 22 to 25, wherein, a peripheral wall of the ball joint is provided with a limiting protrusion, and the ball joint housing is correspondingly provided with a limiting groove matched with the limiting protrusion.

28. A laundry lifting device provided with the centrifugal drainage mechanism according to any one of claims 21 to 27, comprising a lifting rib shell provided with a chamber inside, wherein the centrifugal drainage mechanism is arranged in the lifting rib shell .

29. The laundry lifting device according to claim 28, comprising a mounting cover plate, wherein,
the lifting rib shell is of a shell with an opening,
the mounting cover plate is configured to block the opening of the lifting rib shell, and the centrifugal drainage mechanism is fixedly mounted on the mounting cover plate;
preferably, a valve plug mounting seat is fixedly attached on the mounting cover plate,
the valve plug mounting seat is of a sleeve , a lower end of the valve plug mounting seat is open, and an upper end of the valve plug mounting seat is closed; and
a closed end of the valve plug mounting seat is provided with a through hole for allowing the valve rod to move up and down, and a compression spring is arranged between the valve plug mounting seat and the valve plug.

30. A washing machine provided with the centrifugal drainage mechanism according to any one of claims 21 to 27 or the laundry lifting device according to claim 8 or 9.

31. A centrifugal drainage mechanism for a washing machine, comprising, a centrifugal component; a valve plug component normally sealing a water drainage hole of a washing machine; and a lever,
wherein one end of the lever is connected with the centrifugal component, and the other end of the lever is connected with the valve plug component by a connecting ring.

32. The centrifugal drainage mechanism for a washing machine according to claim 31, wherein, the valve plug component comprises: a valve plug; and a valve rod, wherein,
one end of the valve rod is connected with the valve plug, and the other end of the valve rod is provided with a valve rod connecting hole;
an upper end of the connecting ring is hung on the lever, and a lower end of the connecting ring passes through the valve rod connecting hole to connect the valve rod with the lever.

33. The centrifugal drainage mechanism for a washing machine according to claim 31, wherein, an end, matched with the valve rod, of the lever is fixedly provided with a connecting beam; and
the connecting ring is provided with an annular body, the annular body is hung on the connecting beam after passing through the valve rod connecting hole;
preferably, a peripheral wall of the connecting beam is provided with a limiting groove which is in fit with the connecting ring, and the connecting ring is hung inside the limiting groove;
preferably, the connecting beam is provided with a beam connecting hole, and the connecting ring passes through the valve rod connecting hole and the beam connecting hole, respectively.

34. The centrifugal drainage mechanism for a washing machine according to claim 33, wherein, the annular body comprises an arc-shaped hook portion hung on the connecting beam, and a lifting portion matched with the valve rod connecting hole; and
the arc-shaped hook portion is matched with a radian of an outer peripheral wall of the connecting beam, and the lifting portion passes through the valve rod connecting hole and is at least partially configured as a straight rod shape;
preferably, the lifting portion comprises a straight section, and a first curved section and a second curved section, wherein, the first curved section and the second curved section are connected to both ends of the straight section and bent upwards.

35. The centrifugal drainage mechanism for a washing machine according to claim 34, wherein, the annular connecting body comprises a first connecting section connected between the arc-shaped hook portion and the first curved section, and a second connecting section connected between the arc-shaped hook portion and the second curved section;
preferably, the arc-shaped hook portion, the first connecting section, the lifting portion, and the second connecting section are connected end to end to form an the connecting ring with an elongated ring-shape, and the first connecting section or the second connecting section is provided with an opening.

36. The centrifugal drainage mechanism for a washing machine according to claim 35, wherein, the connecting ring is made of an elastic material, the opening is elastically deformable, and the opening is opened or closed under the action of its own elasticity; or,
the connecting ring is made of a non-elastic material, and the opening is closed by a closing mechanism after the valve rod is connected with the lever by the annular body.

37. The centrifugal drainage mechanism for a washing machine according to any one of claims 32 to 36, wherein, the valve rod connecting hole is a through hole transversely penetrating along a radial direction of the valve rod and formed at an end of the valve rod; and
the valve rod connecting hole comprises a cylindrical hole having a constant inner diameter and located in the middle, and tapered holes located at both ends of the cylindrical hole and gradually expanding outward from inside to outside.

38. The centrifugal drainage mechanism for a washing machine according to any one of claims 33 to 36, wherein, an end, matched with the valve plug component, of the lever is provided with a groove, and the connecting beam is fixedly connected in the groove;
preferably, a projection of a central axis of the valve rod connecting hole intersects with a projection of the connecting beam on the same plane.

39. The centrifugal drainage mechanism for a washing machine according to any one of claims 31 to 38, wherein, the connecting ring comprises a set of connected rings, a structure of the connecting ring gradually extending outwardly from an innermost ring to an outermost ring is like a paper clip, and
the outermost ring is respectively in hook connection with the lever and the valve plug component; or,
the connecting ring includes a plurality of chain links in the shape of a ring, the chain links are connected in series to form a chain-like connecting ring,
a chain link at an upper end of the connecting ring is connected with the lever, and a chain link at a lower end of the connecting ring is connected with the valve plug component.

40. A washing machine provided with the centrifugal drainage mechanism according to any one of claims 31 to 39.
